# EUROPÄISCHE PATENTSCHRIFT

(11) **EP 3 009 325 B1**
(45) Veröffentlichungstag und Bekanntmachung des Hinweises auf die Patenterteilung: **03.05.2017**
(21) Anmeldenummer: 15190064.4
(22) Anmeldetag: 16.10.2015
(51) Int. Cl.: B62D 1/04, B62B 3/06, B66F 9/075

(54) **LENKER EINES EINEN FAHRERARBEITSPLATZ AUFWEISENDEN FLURFÖRDERZEUGS**
STEERING WHEEL OF A INDUSTRIAL TRUCK COMPRISING A DRIVER WORKPLACE
VOLANT POUR CHARIOT DE MANUTENTION DOTE D'UN POSTE DE TRAVAIL DU CONDUCTEUR

(30) Priorität: 17.10.2014 DE 102014015375; 22.12.2014 DE 102014119403; 15.10.2015 DE 102015117514
(43) Veröffentlichungstag der Anmeldung: 20.04.2016
(73) Patentinhaber: OM Carrelli Elevatori S.p.A., 20020 Lainate (MI) (IT)
(72) Erfinder: Mariotti, Fabio, 42016 Guastalla (IT); Castagnoli, Fabrizio, 46029 Suzzara - Mantova (IT); Kretschmer, Steffen, 63868 Grosswallstadt (DE); Balugani, Giorgio, 40054 Budrio - Bologna (IT)
(74) Vertreter: Patentship Patentanwaltsgesellschaft mbH

(56) Entgegenhaltungen:
- EP-A2- 2 113 440
- EP-B1- 1 155 939
- DE-U1- 7 805 602
- US-A1- 2002 047 255
- US-A1- 2002 190 848

## Beschreibung

Die Erfindung betrifft einen Lenker eines einen Fahrerarbeitsplatz, insbesondere Fahrerstand, aufweisenden Flurförderzeugs, wobei der Lenker als Lenkrad ausgebildet ist, das einen Lenkkranz aufweist, der an einer Lenkerkonsole angeordnet ist, die um eine Drehachse drehbar angeordnet ist, wobei an dem Lenkkranz zumindest ein ringförmiges, drehbares Bedienelement zur Steuerung des Fahrantriebs des Flurförderzeugs angeordnet ist, das von einer Bedienperson, die den Lenkkranz mit einer Hand umgreift, mittels des Daumens der den Lenkkranz umgreifenden Hand betätigbar ist, wobei beabstandet von dem Lenkkranz mindestens ein Zusatzbedienelement derart an der drehbaren Lenkerkonsole angeordnet ist, dass von einer Bedienperson, die den Lenkkranz mit einer Hand umgreift, mittels des Daumens der den Lenkkranz umgreifenden Hand das Bedienelement zur Steuerung des Fahrantriebs betätigbar ist und mittels des abgespreizten Zeigefingers und/oder des abgespreizten Mittelfingers der den Lenkkranz umgreifenden Hand das mindestens eine Zusatzbedienelement betätigbar ist.

Bei Flurförderzeugen ist es bekannt, einen Lenkantrieb mittels eines als Lenkrades ausgebildeten Lenkers zu steuern. Bei Flurförderzeugen, die von einer in einem als Fahrerstand ausgebildete Fahrerarbeitsplatz befindlichen Bedienperson im Stehen bedient werden, ist es bekannt, an dem im Wesentlichen ringförmigen Lenkkranz des Lenkrades mindestens ein ringförmiges, drehbares Bedienelement zur Steuerung des Fahrantriebs des Flurförderzeugs anzuordnen. Das ringförmige Bedienelement kann von einer Bedienperson, die den Lenkkranz mit einer Hand umgreift, mittels des Daumens der den Lenkkranz des Lenkrades umgreifenden Hand betätigt werden kann, so dass von der Bedienperson mit der den Lenkkranz umgreifenden Hand gleichzeitig durch Drehen des Lenkrades gelenkt und durch Betätigen des ringförmigen Bedienelements der Fahrantrieb betätigt werden kann.

Ein als Lenkrad ausgebildeter Lenker für ein als Kommissionierer ausgebildetes Flurförderzeug ist aus der EP 1 155 939 B1 bekannt.

Bei dem aus der EP 1 155 939 B1 bekannten, als Lenkrad ausgebildeten Lenker ist nachteilig, dass während des Fahrbetriebs, in dem die Bedienperson mit einer Hand den Lenkkranz umgreift und mit dem Daumen der den Lenkkranz umgreifenden Hand das Bedienelement zur Steuerung des Fahrantriebs betätigt, die Bedienperson zwar gleichzeitig Lenken und den Fahrantrieb betätigen kann, jedoch mit der den Lenkkranz des Lenkrades umgreifenden Hand keine Zusatzfunktion des Flurförderzeugs bedienen kann, beispielsweise einen Hubantrieb.

Aus der EP 2 113 440 A2 ist ein gattungsgemäßer Lenker eines Flurförderzeugs bekannt.

Die US 2002/0047255 A1 offenbart ein drehbares Lenkrad, bei dem radial innerhalb des Lenkkranzes ein feststehender Mittelteil angeordnet ist, an dem Zusatzbedienelemente angeordnet sind.

Die DE 78 05 602 U1 offenbart ein drehbares Lenkrad, das an der Rückseite mit Zusatzbedienelementen versehen ist.

Die US 2002/0190848 A1 offenbart ein drehbares Lenkrad, bei dem an einer Lenkerkonsole zusätzliche Bedienelemente für eine Hupe angeordnet sind.

Der vorliegenden Erfindung liegt die Aufgabe zugrunde, einen Lenker für ein Flurförderzeug zur Verfügung zu stellen, das eine verbesserte Bedienung des Flurförderzeugs ermöglicht.

Diese Aufgabe wird erfindungsgemäß dadurch gelöst, dass das mindestens eine Zusatzbedienelement an einer Stirnseite eines Trägers angeordnet ist, der an der Lenkerkonsole angeordnet ist und sich speichenartig nach radial Außen erstreckt. Das erfindungsgemäße Lenkrad ist somit mit mindestens einem an der drehbaren Lenkerkonsole angeordneten Zusatzbedienelement versehen, mit dem eine weitere Funktion des Flurförderzeugs gesteuert werden kann. Das an der drehbaren Lenkerkonsole angeordnete Zusatzbedienelement ist hierbei von dem Lenkkranz des Lenkrades beabstandet angeordnet, wobei der Abstand derart ausgeführt und gewählt ist, dass die Bedienperson mit der den Lenkkranz umgreifenden Hand mit dem Daumen das Bedienelement des Fahrantriebs betätigen kann und gleichzeitig mit dem abgespreizten Zeigefinger und/oder mit dem abgespreizten Mittelfinger das Zusatzbedienelement betätigen kann. Durch die erfindungsgemäße Anordnung mindestens eines Zusatzbedienelements an der drehbaren Lenkerkonsole wird somit ermöglicht, dass während des Fahrbetriebs, in dem die Bedienperson mit einer Hand den Lenkkranz des Lenkrades umgreift und mit dem Daumen der den Lenkkranz umgreifenden Hand das Bedienelement zur Steuerung des Fahrantriebs betätigt, die Bedienperson gleichzeitig Lenken und mit dem Daumen der den Lenkkranz umgreifenden Hand durch Betätigen des Bedienelements den Fahrantrieb betätigen kann sowie mit dem abgespreizten Zeigefinger und/oder Mittelfinger der den Lenkkranz umgreifenden Hand durch Betätigen des Zusatzbedienelements gleichzeitig mindestens eine Zusatzfunktion des Flurförderzeugs bedienen kann. Das mit dem erfindungsgemäßen Lenkrad versehene Flurförderzeug weist somit eine verbesserte Bedienung des Flurförderzeugs auf, da die Bedienperson mit einer den Lenkkranz umgreifenden Hand und somit mit nur einer einzigen Hand gleichzeitig Lenken, durch Bedienen des Bedienelements den Fahrantrieb steuern kann und durch Bedienen des Zusatzbedienelements mindestens eine Zusatzfunktion des Flurförderzeugs steuern kann. Mit einem derartigen, speichenartigen Träger, der an der Lenkkonsole befestigt oder einstückig angeformt werden kann, wird es auf einfache Weise ermöglicht, das mindestens eine Zusatzbedienelement auf der Rückseite des Lenkrades beabstandet zu dem Lenkkranz an der Lenkerkonsole derart anzuordnen, dass sich das Zusatzbedienelement in radialer Richtung auf Höhe des Lenkkranzes befindet, so dass das Zusatzbedienelement von dem abgespreizten Zeigefinger und/oder abgespreizten Mittelfinger der den Lenkkranz umgreifenden Hand in ergonomisch günstiger Weise betätigt werden kann.

Gemäß einer vorteilhaften Ausführungsform der Erfindung ist das mindestens eine Zusatzbedienelement derart an der drehbaren Lenkerkonsole angeordnet, dass der Handballen der den Lenkkranz umgreifenden Hand bei der gleichzeitigen Betätigung des Bedienelements mit dem Daumen und des Zusatzbedienelements mit dem abgespreizten Zeigefinger und/oder dem abgespreizten Mittelfinger auf dem Lenkkranz aufliegt. Hierdurch wird bei günstiger Ergonomie ermöglicht, dass die Bedienperson mit der den Lenkkranz umgreifenden Hand durch Betätigen des Lenkrades lenken kann und gleichzeitig durch Betätigen des Bedienelements den Fahrantrieb steuern sowie durch Betätigen des Zusatzbedienelements eine Zusatzfunktion des Flurförderzeugs steuern kann.

Gemäß einer bevorzugten Ausgestaltungsform der Erfindung ist das mindestens eine Zusatzbedienelement an einer dem Fahrarbeitsplatz abgewandten Rückseite des Lenkrades beabstandet von dem Lenkkranz angeordnet. Mit der Anordnung des Zusatzbedienelements an der drehbaren Lenkerkonsole auf der dem Fahrerarbeitsplatz abgewandten Rückseite des Lenkkranzes wird es auf einfache und ergonomische Weise ermöglicht, dass die Bedienperson mit der den Lenkkranz umgreifenden Hand mit dem Daumen das am Lenkkranz angeordnete Bedienelement des Fahrantriebs und durch gleichzeitiges Abspreizen und somit durch Ausstrecken des Zeigefingers und/oder des Mittelfingers das an der Lenkerkonsole angeordnete Zusatzbedienelement betätigen kann.

Besondere Vorteile ergeben sich, wenn gemäß einer Weiterbildung der Erfindung ein erstes Zusatzbedienelement vorgesehen ist, das mittels des abgespreizten Zeigefingers der den Lenkkranz umgreifenden Hand betätigbar ist, und ein zweites Zusatzbedienelement vorgesehen ist, das mittels des abgespreizten Mittelfingers der den Lenkkranz umgreifenden Hand betätigbar ist. Mit dem erfindungsgemäßen Lenkrad wird es somit möglich, mehrere unterschiedliche Zusatzfunktionen mittels mehrerer Zusatzbedienelemente, die jeweils an der drehbaren Lenkerkonsole angeordnet sind, gleichzeitig mit dem Fahrbetrieb und somit im Fahrbetrieb des Flurförderzeugs mit einer einzigen Hand zu bedienen und zu steuern.

Gemäß einer bevorzugten Ausführungsform der Erfindung weist der Lenkkranz einen linken Griffabschnitt, einen rechten Griffabschnitt und einen Mittelgriffabschnitt auf, wobei ein linkes Bedienelement zur Steuerung des Fahrantriebs am Übergang des linken Griffabschnitts zum Mittelgriffabschnitt und ein rechtes Bedienelement zur Steuerung des Fahrantriebs am Übergang des rechten Griffabschnitts zum Mittelgriffabschnitt angeordnet ist, wobei dem linken Bedienelement und dem rechten Bedienelement jeweils mindestens ein Zusatzbedienelement zugeordnet ist. Ein derartiges Lenkrad ermöglicht mehrere Griff- und Bedienpositionen. Für die Vorwärtsfahrt und/oder die Rückwärtsfahrt des Flurförderzeugs kann die Bedienperson in einer normalen Griffposition mit der linken Hand den linken Griffabschnitt umgreifen und mit dem Daumen der linken Hand das linke Bedienelement des Fahrantriebs betätigen und/oder mit der rechten Hand den rechten Griffabschnitt umgreifen und mit dem Daumen der rechten Hand das rechte Bedienelement des Fahrantriebs betätigen.

Für die Rückwärtsfahrt ist mit einem derartigen Lenkrad eine verbesserte Ergonomie erzielbar, wenn in einer alternativen Griffposition die Bedienperson mit der linken Hand den Mittelgriffabschnitt umgreift und mit dem Daumen der linken Hand das rechte Bedienelement des Fahrantriebs betätigt oder mit der rechten Hand den Mittelgriffabschnitt umgreift und mit dem Daumen der rechten Hand das linke Bedienelement des Fahrantriebs betätigt. Sofern dem linken Bedienelement und dem rechten Bedienelement jeweils mindestens ein Zusatzbedienelement zugeordnet ist, wird es ermöglicht, dass die Bedienperson sowohl in der normalen Griffposition, in der die Hand der Bedienperson den entsprechenden ersten oder zweiten Griffabschnitt umgreift, als auch in der alternativen Griffposition, der die Hand der Bedienperson den Mittelgriffabschnitt umgreift, mit dem Daumen das entsprechende Bedienelement des Fahrantriebs und gleichzeitig mit dem abgespreizten Zeigefinger und/oder abgespreizten Mittelfinger das Zusatzbedienelement betätigen kann.

Gemäß einer Weiterbildung der Erfindung sind an dem Träger zwei Zusatzbedienelemente angeordnet, wobei zwischen den Zusatzbedienelementen der Träger mit einem Trennelement, insbesondere einem wandartigen oder rippenartigen Trennelement, versehen ist. Mit zwei an dem entsprechenden Träger angeordneten Zusatzbedienelementen können von der Bedienperson mit dem Zeigefinger und dem Mittelfinder der den Lenkkranz zwei verschiedene Zusatzfunktionen des Flurförderzeugs bedient werden. Ein Trennelement, beispielsweise ein wandartiges oder rippenartiges Trennelement, an dem Träger, das zwischen den beiden Zusatzbedienelementen angeordnet ist, ermöglicht es hierbei, dass die Bedienperson mit dem Zeigefinger bzw. dem Mittelfinger das Trennelement ertasten kann und somit erfühlen kann, welches der beiden Zusatzbedienelemente gerade mit dem Zeigefinger bzw. dem Mittelfinger betätigt wird, so dass Fehlbedingungen verringert werden können sowie das gleichzeitige Betätigen von zwei Zusatzbedienelementen mit nur einem Finger vermieden werden kann.

Das Zusatzbedienelement kann gemäß einer vorteilhaften Ausführungsform der Erfindung als Wippschalter oder Kippschalter ausgebildet sein. Ein Wippschalter bzw. ein Kippschalter kann in intuitiver Weise betätigt werden, so dass sich eine einfache und funktionssichere Betätigung des Zusatzbedienelements erzielen lässt.

Sofern zwei als Wippschalter oder Kippschalter ausgebildete Zusatzbedienelemente vorgesehen sind, ergeben sich besondere Vorteile, wenn gemäß einer Ausführungsform der Erfindung die beiden Zusatzbedienelemente von dem Lenkkranz unterschiedlichen Abstand aufweisen, wobei das von dem Zeigefinger betätigbare Zusatzbedienelement zwischen dem Lenkkranz und dem von dem Mittelfinger betätigbaren Zusatzbedienelement angeordnet ist. Dem linken Bedienelement zur Steuerung des Fahrantriebs und dem rechten Bedienelement zur Steuerung des Fahrantriebs sind somit jeweils zwei Zusatzbedienelemente zugeordnet. Die beiden Zusatzbedienelemente sind somit - in Längsrichtung der Drehachse des Lenkrades gesehen - hintereinander angeordnet und weisen von dem Lenkkranz unterschiedliche Abstände auf. Hierdurch wird auf einfache Weise eine intuitive Zuordnung und ergonomische Bedienung von zwei als Wippschaltern oder Kippschaltern ausgebildeten Zusatzbedienelementen erzielt, bei der das näher an dem Lenkkranz angeordnete Zusatzbedienelement von dem abgespreizten Zeigefinger und das weiter von dem Lenkkranz weg angeordnete Zusatzbedienelement von dem abgespreizten Mittelfinger der den Lenkkranz umgreifenden Hand betätigt werden kann.

Gemäß einer vorteilhaften Ausgestaltungform der Erfindung ist das als Wippschalter oder Kippschalter ausgebildete Zusatzbedienelement um eine Schwenkachse betätigbar, wobei die Schwenkachse parallel zur Drehachse des Lenkrades angeordnet ist. Hierdurch ergibt sich eine Anordnung der Schwenkachse des Zusatzbedienelements bzw. der Zusatzbedienelemente, die senkrecht zum Lenkkranz ist.

Gemäß einer alternativen und ebenfalls vorteilhaften Ausgestaltungform der Erfindung ist das als Wippschalter oder Kippschalter ausgebildete Zusatzbedienelement um eine Schwenkachse betätigbar, wobei die Schwenkachse geneigt zur Drehachse des Lenkrades angeordnet ist. Hierdurch ergibt sich eine Anordnung der Schwenkachse des Zusatzbedienelements bzw. der Zusatzbedienelemente, die geneigt zum Lenkkranz ist, wodurch sich ergonomische Vorteile bei der Betätigung der Zusatzbedienelemente ergeben.

Bei einer Ausführungsform der Erfindung, bei der dem linken Bedienelement zur Steuerung des Fahrantriebs und dem rechten Bedienelement zur Steuerung des Fahrantriebs jeweils zwei als Wippschalter oder Kippschalter ausgebildete Zusatzbedienelemente zugeordnet sind, die jeweils um eine Schwenkachse betätigbar sind, können gemäß einer vorteilhaften Ausgestaltungsform der Erfindung die Schwenkachsen der Zusatzbedienelemente fluchtend angeordnet sein. In Umfangsrichtung des Lenkkranzes gesehen, sind somit die beiden Zusatzbedienelemente, die einem Bedienelement des Fahrantriebs zugeordnet sind, jeweils an derselben Position angeordnet.

Bei einer Ausführungsform der Erfindung, bei der dem linken Bedienelement zur Steuerung des Fahrantriebs und dem rechten Bedienelement zur Steuerung des Fahrantriebs jeweils zwei als Wippschalter oder Kippschalter ausgebildete Zusatzbedienelemente zugeordnet sind, die jeweils um eine Schwenkachse betätigbar sind, können gemäß einer alternativen und ebenfalls vorteilhaften Ausgestaltungsform der Erfindung die Schwenkachsen der Zusatzbedienelemente in Umfangsrichtung des Lenkkranzes versetzt zueinander angeordnet sein. In Umfangsrichtung des Lenkkranzes gesehen, sind somit die beiden Zusatzbedienelemente, die einem Bedienelement des Fahrantriebs zugeordnet sind, jeweils versetzt zueinander und somit an verschiedenen Positionen angeordnet, wodurch sich ergonomische Vorteile bei der Betätigung der Zusatzbedienelemente ergeben.

Das Zusatzbedienelement kann gemäß einer alternativen und vorteilhaften Ausführungsform als Schiebeschalter ausgebildet sein. Ein Schiebeschalter kann in intuitiver Weise betätigt werden, so dass sich eine einfache und funktionssichere Betätigung des Zusatzbedienelements erzielen lässt. Weiterhin weist ein Schiebeschalter als Vorteil auf, dass sich der Verschiebeweg gut dosieren lässt, so dass sich mit einem Schieberschalter eine Zusatzfunktion in einfacher Weise proportional steuern lässt.

Sofern zwei als Schiebeschalter ausgebildete Zusatzbedienelemente vorgesehen sind, ergeben sich besondere Vorteile, wenn gemäß einer Ausführungsform der Erfindung, die Zusatzbedienelemente nebeneinander angeordnet sind. Die beiden Zusatzbedienelement sind somit nebeneinander angeordnet und somit in Umfangrichtung des Lenkkranzes voneinander beabstandet. Hierdurch wird auf einfache Weise eine intuitive Zuordnung und ergonomische Bedienung von zwei als Schiebeschaltern ausgebildeten Zusatzbedienelementen erzielt, bei der das in Umfangsrichtung des Lenkkranzes gesehene obere Zusatzbedienelement von dem abgespreizten Zeigefinger und das in Umfangsrichtung des Lenkkranzes gesehene untere Zusatzbedienelement von dem abgespreizten Mittelfinger der den Lenkkranz umgreifenden Hand betätigt werden kann. Zudem wird hierdurch eine ergonomisch günstige Betätigungsrichtung der Schiebeschalter ermöglicht, da diese durch eine Streckbewegung des Zeigefingers bzw. des Mittelfingers betätigt werden können.

Bei einer Ausführungsform der Erfindung, bei der dem linken Bedienelement zur Steuerung des Fahrantriebs und dem rechten Bedienelement zur Steuerung des Fahrantriebs jeweils zwei Zusatzbedienelemente zugeordnet sind, wobei die Zusatzbedienelemente jeweils eine Betätigungsfläche aufweisen, können gemäß einer vorteilhaften Ausführungsform der Erfindung die Betätigungsflächen der beiden Zusatzbedienelemente von der Drehachse des Lenkrades gleichen radialen Abstand aufweisen. Die Betätigungsflächen der beiden Zusatzbedienelemente sind somit in einer gemeinsamen Ebene angeordnet.

Bei einer Ausführungsform der Erfindung, bei der dem linken Bedienelement zur Steuerung des Fahrantriebs und dem rechten Bedienelement zur Steuerung des Fahrantriebs jeweils zwei Zusatzbedienelemente zugeordnet sind, wobei die Zusatzbedienelemente jeweils eine Betätigungsfläche aufweisen, können gemäß einer alternativen und vorteilhaften Ausführungsform der Erfindung, die Betätigungsflächen der beiden Zusatzbedienelemente von der Drehachse des Lenkrades unterschiedliche radiale Abstände aufweisen. Die Betätigungsflächen der beiden Zusatzbedienelemente sind somit auf verschiedenen Ebenen angeordnet. Hierdurch ergeben sich unterschiedliche Höhen der Betätigungsflächen der beiden Zusatzbedienelemente, wodurch sich ergonomische Vorteile bei der Betätigung der Zusatzbedienelemente ergeben.

Vorteilhafterweise weist hierbei das von dem Zeigefinger betätigbare Zusatzbedienelement einen geringeren radialen Abstand von der Drehachse des Lenkrades aufweist wie das von dem Mittelfinger betätigbaren Zusatzbedienelement. Die Betätigungsfläche des von dem Mittelfinger betätigbaren Zusatzbedienelements ist somit höher angeordnet als Betätigungsfläche des von dem Zeigefinger betätigbaren Zusatzbedienelements. Hierdurch ist eine intuitive und ergonomisch günstige Betätigung der beiden Zusatzbedienelemente mit dem Zeigefinger und dem Mittelfinger einer den Lenkkranz umgreifenden Hand erzielbar.

Gemäß einer vorteilhaften Ausführungsform der Erfindung ist mittels des Zusatzbedienelements ein Hubantrieb des Flurförderzeugs steuerbar. Mit dem erfindungsgemäßen Lenkrad wird es somit ermöglicht, dass eine Bedienperson mit der den Lenkkranz umgreifenden Hand gleichzeitig lenken, mit dem Daumen den Fahrantrieb und mit dem abgespreizten Zeigefinger und/oder mit dem abgespreizten Mittelfinger durch Betätigen des Zusatzbedienelements einen Hubantrieb steuern kann.

Besondere Vorteile sind erzielbar, wenn der Hubantrieb als Zusatzhubantrieb eines Lastaufnahmemittels ausgebildet ist. Mit dem erfindungsgemäßen Lenkrad wird es somit ermöglicht, dass eine Bedienperson mit der den Lenkkranz umgreifenden Hand während des Fahrbetriebs gleichzeitig einen Zusatzhubantrieb des Lastaufnahmemittels steuern kann, wodurch sich eine verbesserte Bedienung des Flurförderzeugs erzielen lässt und eine hohe Umschlagsleitung des Flurförderzeugs erzielen lässt.

Besondere Vorteile sind erzielbar, wenn der Hubantrieb als Hubfunktion eines anhebbaren und absenkbaren Fahrerarbeitsplatzes ausgebildet ist. Mit dem erfindungsgemäßen Lenkrad wird es somit ermöglicht, dass eine Bedienperson mit der den Lenkkranz umgreifenden Hand während des Fahrbetriebs gleichzeitig den Fahrerarbeitsplatz anheben und absenken kann, wodurch sich eine verbesserte Bedienung des Flurförderzeugs erzielen lässt und eine hohe Umschlagsleitung des Flurförderzeugs erzielen lässt.

Das Flurförderzeug ist gemäß einer vorteilhaften Ausführungsform der Erfindung als Horizontalkommissionier oder Niederhubwagen oder Hochhubwagen ausgebildet, der als durch das mindestens eine Zusatzbedienelement steuerbare Zusatzfunktion einen Zusatzhubantrieb eines Lastaufnahmemittels und/oder eine Hubfunktion eines anhebbaren und absenkbaren Fahrerarbeitsplatzes aufweist. Horizontalkommissionier oder Niederhubwagen oder Hochhubwagen weisen als Haupthubfunktion einen Initialhub von Lastarmen eines Lastteils auf, der mittels eines an der Lenkerkonsole angeordneten Bedienelements gesteuert werden kann. Als Zusatzfunktion kann bei einem Horizontalkommissionierer oder Niederhubwagen oder Hochhubwagen ein Zusatzhubantrieb eines als Lastgabel ausgebildeten Lastaufnahmemittels und/oder eine Hubfunktion eines anhebbaren und absenkbaren Fahrerarbeitsplatzes vorgesehen sein. Sofern ein derartiger Horizontalkommissionierer, Niederhubwagen oder Hochhubwagen mit einer oder mehreren Zusatzfunktionen versehen ist, kann durch entsprechende Anzahl von Zusatzbedienelementen an dem erfindungsgemäßen Lenkrad auf einfache Weise die Bedienperson während des Fahrbetriebs mit der den Lenkkranz umgreifenden Hand ein oder mehrere Zusatzfunktionen betätigen.

Das Flurförderzeug ist gemäß einer alternativen vorteilhaften Ausführungsform als Vertikalkommissionierer ausgebildet ist, der als durch das mindestens eine Zusatzbedienelement steuerbare Zusatzfunktion einen Zusatzhubantrieb eines Lastaufnahmemittels aufweist. Vertikalkommissionier weisen als Haupthubfunktion einen Hubantrieb des anhebbaren und absenkbaren Fahrerarbeitsplatzes auf, an dem ein Lastaufnahmemittel angeordnet ist. Die Haupthubfunktion kann mittels eines an der Lenkerkonsole angeordneten Bedienelements gesteuert werden. Als Zusatzfunktion kann bei einem Vertikalkommissionierer ein Zusatzhubantrieb des Lastaufnahmemittels vorgesehen sein, mit dem das Lastaufnahmemittel relativ zu dem anhebbaren und absenkbaren Fahrerarbeitsplatz anhebbar und absenkbar ist. Sofern ein derartiger Vertikalkommissionierer mit einer Zusatzfunktion versehen ist, kann durch entsprechende Zusatzbedienelementen an dem erfindungsgemäßen Lenkrad auf einfache Weise die Bedienperson während des Fahrbetriebs mit der den Lenkkranz umgreifenden Hand die Zusatzfunktion betätigen.

Weitere Vorteile und Einzelheiten der Erfindung werden anhand der in den schematischen Figuren dargestellten Ausführungsbeispiele näher erläutert. Hierbei zeigt
- Figur 1: ein Flurförderzeug mit einem erfindungsgemäßem Lenkrad in einer perspektivischen Darstellung,
- Figur 2: das erfindungsgemäße Lenkrad in einer Ansicht auf die Vorderseite,
- Figur 3: das erfindungsgemäße Lenkrad in einer Seitenansicht,
- Figur 4: eine perspektivische Ansicht des erfindungsgemäßen Lenkrads,
- Figur 5: eine weitere perspektivische Ansicht des erfindungsgemäßen Lenkrads,
- Figur 6: das erfindungsgemäße Lenkrad mit den beiden Händen einer Bedienperson in einer normalen Griffposition,
- Figur 7: das erfindungsgemäße Lenkrad mit der rechten Hand der Bedienperson in der normalen Griffposition,
- Figur 8: das erfindungsgemäße Lenkrad mit der rechten Hand der Bedienperson in der alternativen Griffposition,
- Figur 9: das erfindungsgemäße Lenkrad mit der rechten Hand der Bedienperson in der normalen Griffposition und der gleichzeitigen Betätigung der Zusatzbedienelemente,
- Figur 10: das erfindungsgemäße Lenkrad mit der rechten Hand der Bedienperson in der normalen Griffposition und der gleichzeitigen Betätigung der Zusatzbedienelemente sowie der linken Hand der Bedienperson in der alternativen Griffposition und der gleichzeitigen Betätigung der Zusatzbedienelemente,
- Figur 11: das erfindungsgemäße Lenkrad mit zwei Ausführungsformen der Zusatzbedienelemente in einer Ansicht auf die Rückseite,
- Figur 12: einen Ausschnitt der Figur 11 mit der rechten Hand der Bedienperson in der normalen Griffposition und der gleichzeitigen Betätigung der Zusatzbedienelemente,
- Figur 13: eine perspektivische Ansicht einer alternativen Ausführung des erfindungsgemäßen Lenkrads,
- Figur 14: das Lenkrad der Figur 13 in einer Seitenansicht und
- Figur 15: einen Ausschnitt der Figuren 13 und 14 in einer vergrößerten Darstellung.

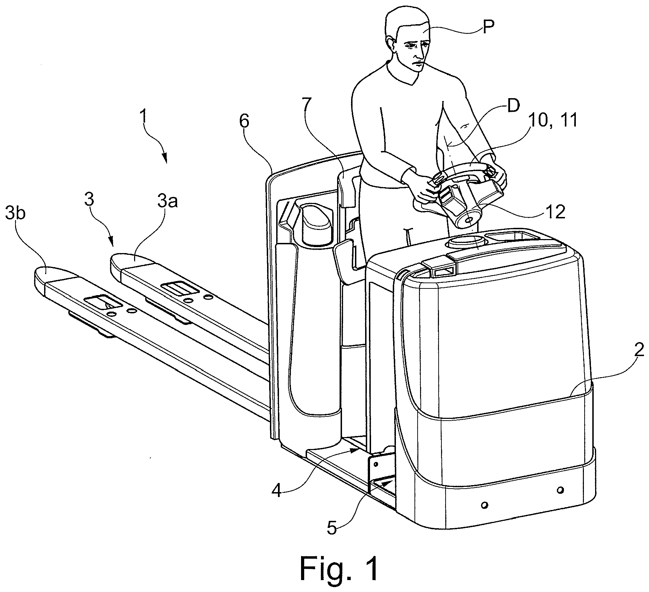

In der Figur 1 ist ein Flurförderzeug 1 mit einem erfindungsgemäßen als Lenkrad 11 ausgebildeten Lenker 10 dargestellt. Das als Niederhubwagen oder Horizontalkommissionierer ausgebildete erfindungsgemäße Flurförderzeug 1 weist einen Antriebsteil 2 und einen Lastteil 3 auf. Zwischen dem Antriebsteil 2 und dem Lastteil 3 ist ein Fahrerarbeitsplatz 4 für eine Bedienperson P angeordnet, der im dargestellten Ausführungsbeispiel als Fahrerstand für eine stehende Bedienperson P ausgebildet ist.

In dem Antriebsteil 2 ist ein lenkbares Antriebsrad angeordnet. Das Antriebsteil 2 ist weiterhin mit einem Batteriefach 5 für eine Traktionsbatterie versehen, die ein elektrisches Antriebssystem des Flurförderzeugs 1 mit elektrischer Energie versorgt.

Das Lastteil 3 besteht im dargestellten Ausführungsbeispiel aus zwei Lastarmen 3a, 3b, die mittels eines Hubantriebs relativ zu dem Antriebsteil 2 anhebbar und absenkbar sind. Der Hubantrieb ermöglicht einen Initialhub der beiden Lastarme 3a, 3b. Im dargestellten Ausführungsbeispiel ist der Fahrerarbeitsplatz 4 in dem dem Lastteil 3 zugewandten Bereich mit einer vertikalen Brüstungswand 6 versehen. An der Brüstungswand 6 kann eine Anlehnhilfe 7 für die stehende Bedienperson P angeordnet sein.

In der Figur 1 befindet sich die Bedienperson P in einer Stellung für die Vorwärtsfahrt, in der die Bedienperson P in Richtung des Antriebsteil 2 blickt.

Zur Bedienung des Flurförderzeugs 1 ist ein erfindungsgemäßer Lenker 10 vorgesehen, der im dargestellten Ausführungsbeispiel oberhalb des Antriebsteils 2 angeordnet ist.

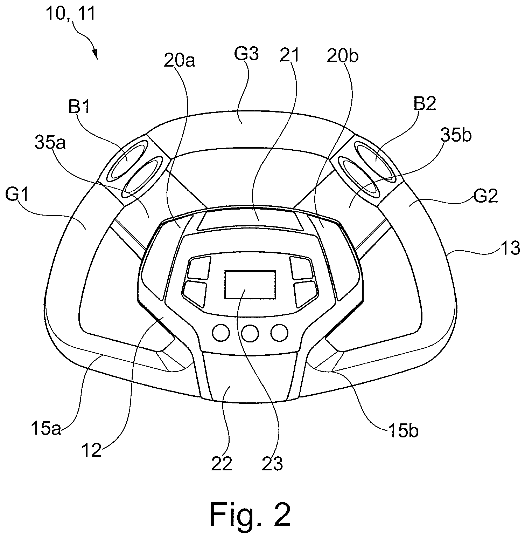

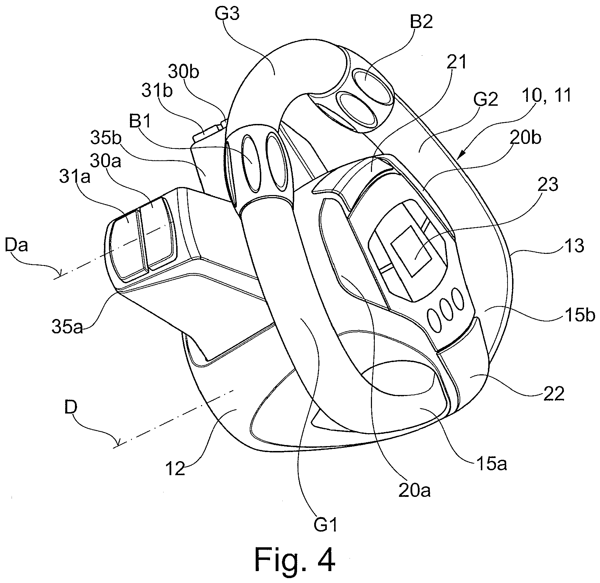

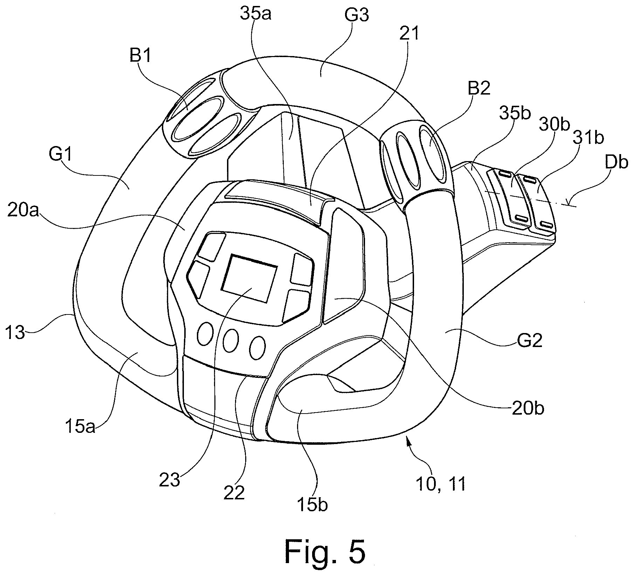

Der erfindungsgemäße Lenker 10 ist - wie in den Figuren 2 bis 5 näher ersichtlich ist - als Lenkrad 11 ausgebildet. Das Lenkrad 11 besteht aus einer Lenkerkonsole 12, die um eine Drehachse D drehbar an dem Flurförderzeugs 1 angeordnet ist, und einem mit der Lenkerkonsole 12 verbundenen Lenkkranz 13. Der Lenkkranz 13 ist als geschlossener Ring ausgebildet und weist - in der Vorderansicht der Figur 2 - eine im Wesentlichen trapezartige Gestalt mit abgerundeten Eckbereichen auf.

Mit dem Lenkrad 11 kann ein Lenkantrieb, beispielsweise ein elektrischer Lenkantrieb, des Antriebsrades gesteuert werden, wobei durch eine Drehbewegung des Lenkrades 11 und der Lenkerkonsole 12 um die Drehachse D ein Lenkgeber betätigt wird, der den Drehwinkel des Lenkrads 11 um die Drehachse D erfasst. Anhand des erfassten Drehwinkel des Lenkrads 11 wird der Lenkantrieb des Antriebsrades angesteuert.

Der Lenkkranz 13 ist im dargestellten Ausführungsbeispiel von einem linken Griffabschnitt G1, einem rechten Griffabschnitt G2 und einem oberen Mittelgriffabschnitt G3 gebildet. Der linke Griffabschnitt G1 und der rechte Griffabschnitt G2 sind jeweils L-förmig ausgebildet und stehen mittels Ansätzen 15a, 15b mit der drehbaren Lenkerkonsole 12 in Verbindung. Die beiden Griffabschnitte G1, G2 sind aufeinander zugeneigt angeordnet und mittels des Mittelgriffabschnitts G3 verbunden. Zur Steuerung des Fahrantriebs des Antriebsrades ist ein linkes Bedienelement B1 am Übergang des linken Griffabschnitts G1 zum Mittelgriffabschnitt G3 und ein rechtes Bedienelement B2 zur Steuerung des Fahrantriebs am Übergang des rechten Griffabschnitts G2 zum Mittelgriffabschnitt G3 angeordnet. Der Mittelgriffabschnitt G3 stellt somit den Bereich des Lenkkranzes 12 zwischen den beiden Bedienelementen B1, B2 dar. Das rechte Bedienelement B2 befindet sich - bezogen auf die in den Figuren 2 bis 5 dargestellte Geradeausfahrtstellung des Lenkrades 11 - in der 2-Uhr Stellung des Lenkrades 11. Das linke Bedienelement B2 befindet sich - bezogen auf die in den Figuren 2 bis 5 dargestellte Geradeausfahrtstellung des Lenkrades 11 - in der 10-Uhr Stellung des Lenkrades 11. Der Mittelgriffabschnitt G3 befindet sich - bezogen auf die in den Figuren 2 bis 5 dargestellte Geradeausfahrtstellung des Lenkrades 11 - im Bereich um die 12-Uhr Stellung des Lenkrades 11.

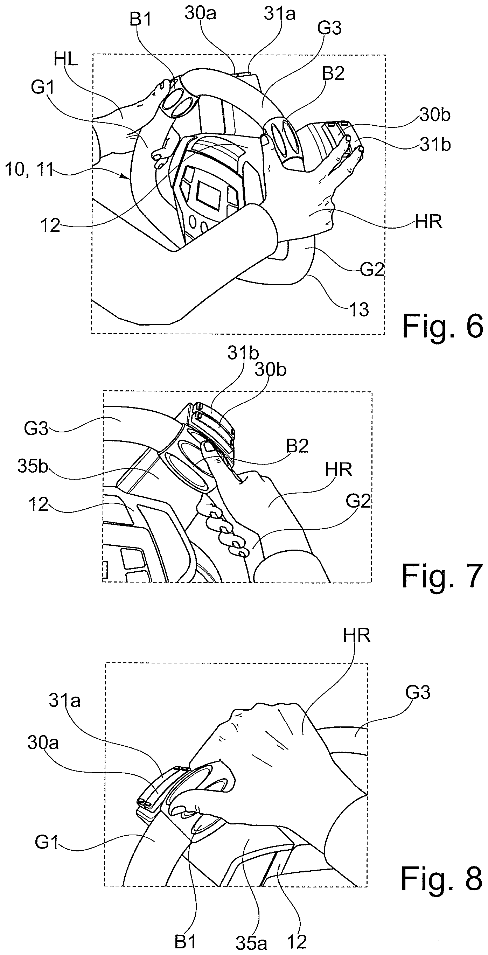

Die Bedienelemente B1, B2 zur Steuerung des Fahrantriebs sind jeweils an dem Lenkkranz 13 angeordnet und als ringförmige, drehbare Bedienelemente B1, B2 ausgebildet. Die Drehachse der Bedienelemente B1, B2 entspricht jeweils der entsprechenden Achse der Griffabschnitte G1, G2, so dass die Bedienelemente B1, B2 um den Lenkkranz 13 gedreht werden können. Die Bedienelemente B1, B2 können von der Bedienperson P, die den Lenkkranz 13 mit der linken Hand HL bzw. der rechten Hand HR oder mit beiden Händen HL, HR umgreift - wie in den Figuren 6-10 und 12 ersichtlich ist - mittels des Daumens der den Lenkkranz 13 umgreifenden Hand HL, HR betätigt werden. Die Bedienelemente B1, B2 können hierzu mit entsprechenden Griffmulden versehen sein, in die der Daumen der entsprechenden Hand HL, HR eingelegt werden kann.

In der dem Fahrerarbeitsplatz 4 zugewandten Vorderseite der Lenkerkonsole 12 sind Bedienelemente angeordnet, beispielsweise als Heben- und Senkenschalter ausgebildete Bedienelemente 20a, 20b zur Steuerung einer Haupthubfunktion des Flurförderzeugs 1, beispielsweise des als Initialhub ausgebildeten Hubantriebs des Flurförderzeugs 1. Im dargestellten Ausführungsbeispiel sind an der dem Fahrerarbeitsplatz 4 zugewandten Vorderseite der Lenkerkonsole 12 weiterhin ein Bedienelement 21 für ein Signalhorn und ein Not-Aus-Schalter 22 angeordnet. Darüber hinaus ist in dem dargestellten Ausführungsbeispiel in der dem Fahrerarbeitsplatz 4 zugewandten Vorderseite der Lenkerkonsole 12 ein Display 23 angeordnet.

Erfindungsgemäß ist an der drehbaren Lenkerkonsole 12 an der dem Fahrerarbeitsplatz 4 abgewandten Rückseite des Lenkrades 11 mit Abstand von dem Lenkkranz 13 in Längsrichtung der Drehachse D der Lenkerkonsole 12 zumindest ein Zusatzbedienelement 30a, 30b, 31 a, 31 b angeordnet.

Im dargestellten Ausführungsbeispiel sind dem linken Bedienelement B1 und dem rechten Bedienelement B2 jeweils mindestens ein Zusatzbedienelement, im vorliegenden Ausführungsbeispiel jeweils zwei Zusatzbedienelemente 30a, 31 a, 30b, 31 b, zugeordnet. Die Zusatzbedienelemente 30a, 31 a sind hierbei mit Abstand hinter dem Bedienelement B1 und die Zusatzbedienelemente 30b, 31 b mit Abstand hinter dem Bedienelement B2 an der drehbaren Lenkerkonsole 12 angeordnet.

Für die Anordnung der Zusatzbedienelemente 30a, 31 a mit Abstand von dem Lenkkranz 13 und somit hinter dem Bedienelement B1 ist an der Lenkerkonsole 12 ein Träger 35a angeordnet, der sich an der Lenkerkonsole 12 speichenartig nach radial Außen in den Bereich des Lenkkranzes 13 erstreckt. Die Zusatzbedienelemente 30a, 31a sind an der radial äußeren Stirnseite des Trägers 35a angeordnet. Entsprechend ist für die Anordnung der Zusatzbedienelemente 30b, 31 b mit Abstand von dem Lenkkranz 13 und somit hinter dem Bedienelement B2 an der Lenkerkonsole 12 ein Träger 35b angeordnet, der sich an der Lenkerkonsole 12 speichenartig nach radial Außen in den Bereich des Lenkkranzes 13 erstreckt. Die Zusatzbedienelemente 30b, 31 b sind an der radial äußeren Stirnseite des Trägers 35b angeordnet.

In dem Ausführungsbeispiel der Figuren 2-10 sind die Zusatzbedienelemente 30a, 30b, 31 a, 31 b jeweils als Wippschalter bzw. Kippschalter ausgebildet.

Die Zusatzbedienelemente 30a, 30b weisen einen ersten Abstand A1 in Längsrichtung der Drehachse D von dem Lenkkranz 13 und die Zusatzbedienelemente 31 a, 31 b weisen einen zweiten Abstand A2 in Längsrichtung der Drehachse D von dem Lenkkranz 13 auf, wobei der erste Abstand A1 kleiner als der zweite Abstand A2 ist. Die Zusatzbedienelemente 30a, 30b sind somit - in Längsrichtung der Drehachse D gesehen - zwischen dem Lenkkranz 13 und den Zusatzbedienelementen 31 a, 31 b angeordnet.

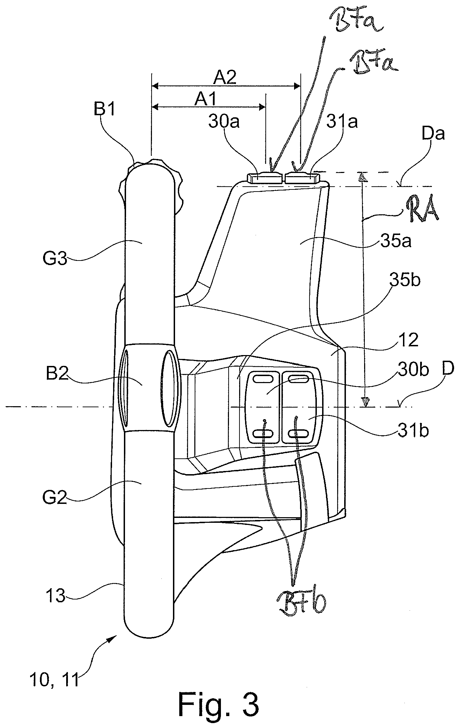

Die als Wippschalter bzw. Kippschalter ausgebildeten Zusatzbedienelemente 30a, 31 a sind um eine Schwenkachse Da betätigbar, die im Wesentlichen parallel zur Drehachse D des Lenkrades 11 verläuft. Entsprechend sind die als Wippschalter bzw. Kippschalter ausgebildeten Zusatzbedienelemente 30b, 31 b um eine Schwenkachse Db betätigbar, die im Wesentlichen parallel zur Drehachse D des Lenkrades 11 verläuft. Die Schwenkachsen Da bzw. Db der Zusatzbedienelemente 30a, 31 a bzw. 30b, 31 b sind somit senkrecht zum Lenkkranz 13 angeordnet. Dies ergibt, dass die Zusatzbedienelemente 30a, 30b, 31 a, 31 b mit der Längserstreckung jeweils im Wesentlichen parallel zu dem Lenkkranz 13 angeordnet sind, wie aus der Figur 3 an den Zusatzbedienelementen 30b, 31 b ersichtlich ist.

In dem Ausführungsbeispiel der Figuren 2-10 sind die Schwenkachsen Da der Zusatzbedienelemente 30a, 31 a fluchtend angeordnet, so dass sich für die Zusatzbedienelemente 30a, 31a eine gemeinsame Schwenkachse Da ergibt. Entsprechend sind die Schwenkachsen Db der Zusatzbedienelemente 30b, 31 b fluchtend angeordnet, so dass sich für die Zusatzbedienelemente 30b, 31 b eine gemeinsame Schwenkachse Db ergibt.

In Umfangsrichtung des Lenkkranzes 13 gesehen, sind somit in den Figuren 2 bis 10 die beiden Zusatzbedienelemente 30a, 31 a bzw. 30b, 31 b, die einem Bedienelement B1 bzw. B2 des Fahrantriebs zugeordnet sind, jeweils an derselben Position angeordnet.

Die Zusatzbedienelemente 30a, 31 a, 30b, 31 b weisen jeweils - wie in der Figur 3 verdeutlich ist - eine Betätigungsfläche BFa, BFb auf.

In den Figuren 2 bis 10 weisen die Betätigungsflächen BFa der beiden Zusatzbedienelemente 30a, 31 a (im unbetätigten Zustand der Zusatzbedienelemente 30a, 31 a) von der Drehachse D des Lenkrades 11 jeweils gleichen radialen Abstand RA auf. Die Betätigungsflächen BFa der beiden Zusatzbedienelemente 30a, 31a sind somit in einer gemeinsamen Ebene angeordnet und weisen im unbetätigten Zustand der beiden Zusatzbedienelemente 30a, 31 a dieselbe Höhe zur Drehachse D auf. Entsprechend weisen die Betätigungsflächen BFb der beiden Zusatzbedienelemente 30b, 31 b (im unbetätigten Zustand der Zusatzbedienelemente 30a, 31 a) von der Drehachse D des Lenkrades 11 jeweils gleichen radialen Abstand RA auf. Die Betätigungsflächen BFb der beiden Zusatzbedienelemente 30b, 31 b sind somit in einer gemeinsamen Ebene angeordnet und weisen im unbetätigten Zustand der beiden Zusatzbedienelemente 30b, 31 b dieselbe Höhe zur Drehachse D auf.

In der Figur 6 ist die Bedienung des erfindungsgemäßen Lenkrades 11 in einer normalen Griffposition der Hände HL, HR der Bedienperson P dargestellt. In der normalen Griffposition umgreift die Bedienperson P mit der linken Hand HL den linken Griffabschnitt G1 von außen und kann mit dem Daumen der linken Hand HL das linke Bedienelement B1 des Fahrantriebs betätigen. In der normalen Griffposition kann die Bedienperson P weiterhin mit der rechten Hand HR den rechten Griffabschnitt G2 umgreifen und mit dem Daumen der rechten Hand HR das rechte Bedienelement B2 des Fahrantriebs betätigen. In der Figur 7 ist die normale Griffposition für die rechte Hand HR in einer vergrößerten Darstellung dargestellt. Die normalen Griffpositionen der Hände HL, HR ermöglichen - wie in der Figur 1 ersichtlich ist - während der Vorwärtsfahrt, wobei die Bedienperson P in Richtung des Antriebsteil 2 blickt, eine ergonomische Bedienung des Lenkrades 11.

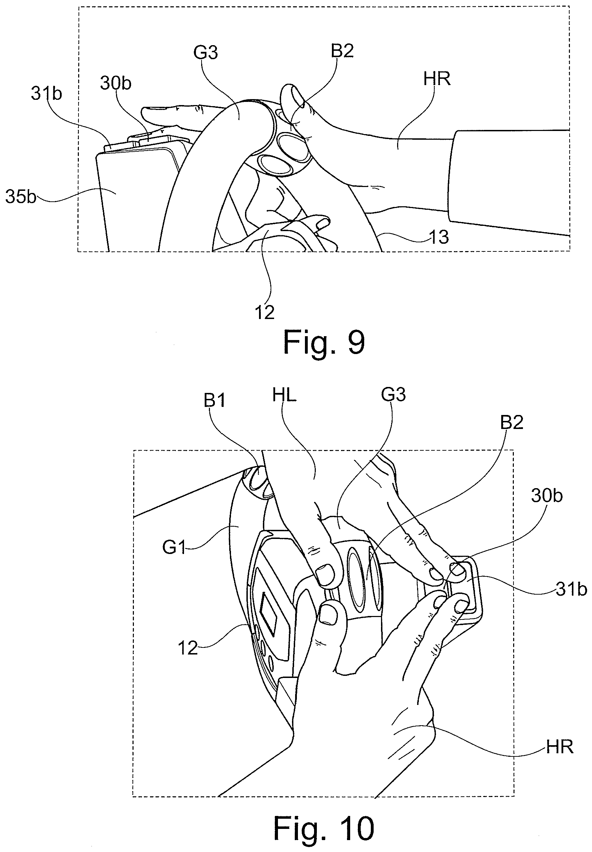

Das erfindungsgemäße Lenkrad 11 ermöglicht weiterhin alternative Griffpositionen, bei denen die Bedienperson - wie in den Figuren 8 und 10 ersichtlich ist - mit der linken Hand HL den Mittelgriffabschnitt G3 umgreift und mit dem Daumen der linken Hand HL das rechte Bedienelement B2 des Fahrantriebs betätigt (Figur 10) bzw. mit der rechten Hand HR den Mittelgriffabschnitt G3 umgreift und mit dem Daumen der rechten Hand HR das linke Bedienelement B1 des Fahrantriebs betätigt (Figur 8). Die alternativen Griffpositionen der Hände HL, HR, in denen eine Hand HL bzw. HR den Mittelgriffabschnitt G3 zur Betätigung des Bedienelements B1 bzw. B2 umgreift, ermöglichen während einer Rückwärtsfahrt, wobei die Bedienperson P sich umdreht und in Richtung des Lastteils 3 blickt, eine ergonomische Bedienung des Lenkrades 11.

Wie in den Figuren 6, 9 und 10 ersichtlich ist, ist der Abstand A1 der Zusatzbedienelemente 30a, 30b von dem Lenkkranz 13 derart ausgeführt, dass die Bedienperson P, die den Lenkkranz 13 mit einer Hand HL, HR umgreift, mittels des Daumens der den Lenkkranz 13 umgreifenden Hand HL, HR das Bedienelement B1 bzw. B2 zur Steuerung des Fahrantriebs betätigen und gleichzeitig mittels des abgespreizten Zeigefingers der den Lenkkranz 13 umgreifenden Hand HL, HR das dem Bedienelement B1, B2 zugeordnete Zusatzbedienelement 30a, 30b betätigen kann.

Wie in den Figuren 6, 9 und 10 weiterhin ersichtlich ist, ist der Abstand A2 der Zusatzbedienelemente 31 a, 31 b von dem Lenkkranz 13 derart ausgeführt, dass von der Bedienperson P, die den Lenkkranz 13 mit einer Hand HL bzw. HR umgreift, mittels des Daumens der den Lenkkranz 13 umgreifenden Hand HL, HR das Bedienelement B1 bzw. B2 zur Steuerung des Fahrantriebs betätigen und gleichzeitig mittels des abgespreizten Mittelfingers der den Lenkkranz 13 umgreifenden Hand HL, HR das dem Bedienelement B1, B2 zugeordnete Zusatzbedienelement 31 a, 31 b betätigen kann.

Wie aus der Figur 10 ersichtlich ist, ist die gleichzeitige Betätigung des Bedienelements B2 des Fahrantriebs und die gleichzeitige Bedienung der dem Bedienelement B2 zugeordneten und mit Abstand hinter dem Bedienelement B2 angeordneten Zusatzbedienelemente 30b, 31 b mit einer einzigen Hand sowohl in der normalen Griffposition der rechten Hand HR als auch in der alternativen Griffposition der linken Hand HL möglich. Es versteht sich, dass die gleichzeitige Betätigung des Bedienelements B1 des Fahrantriebs und die gleichzeitige Bedienung der dem Bedienelement B1 zugeordneten und mit Abstand hinter dem Bedienelement B1 angeordneten Zusatzbedienelemente 30a, 31a in analoger Weise mit einer einzigen Hand sowohl in der normalen Griffposition der linken Hand HL als auch in der alternativen Griffposition der rechten HR möglich ist.

Aus der Figur 9 ist weiterhin ersichtlich, sind die Zusatzbedienelement 30a, 30b, 31a, 31 b derart an der drehbaren Lenkerkonsole 12 angeordnet, dass der Handballen der den Lenkkranz 13 umgreifenden Hand HR bzw. HL bei der gleichzeitigen Betätigung des Bedienelements B2 bzw. B1 mit dem Daumen und des Zusatzbedienelements 30b bzw. 30a mit dem abgespreizten Zeigefinger und/oder des Zusatzbedienelements 31 b bzw. 31a mit dem abgespreizten Mittelfinger auf dem Lenkkranz 13 aufliegt.

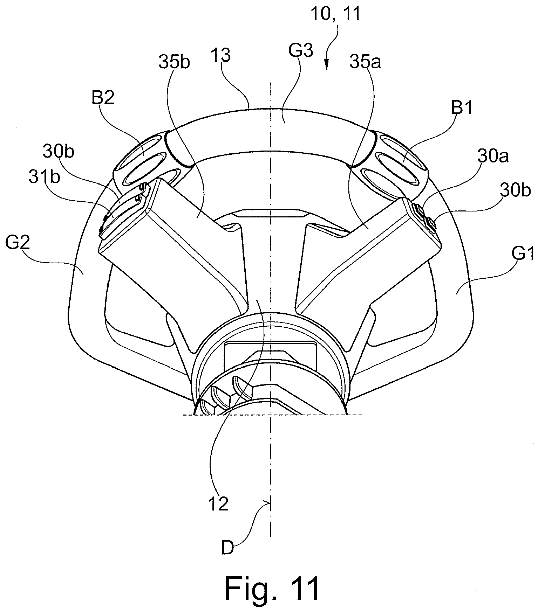

In der Figur 11 ist eine Ansicht des erfindungsgemäßen Lenkrades 11 von der Rückseite aus dargestellt. In der Figur 11 sind jedem Bedienelement B1, B2 des Fahrantriebs zwei Zusatzbedienelemente 30a, 31a, 30b, 31 b zugeordnet, die auf den entsprechenden Trägern 35a, 35b angeordnet sind. Die Zusatzbedienelemente 30b, 31 b sind analog den Figuren 1 bis 10 als Wippschalter bzw. Kippschalter ausgebildet.

Für die Zusatzbedienelemente 30a, 31 a ist eine alternative Ausführung der Zusatzbedienelemente 30a, 31 a als Schiebeschalter dargestellt. Es versteht sich, dass auch die Zusatzbedienelemente 30b, 31 b analog als Schiebeschalter ausgebildet sein können.

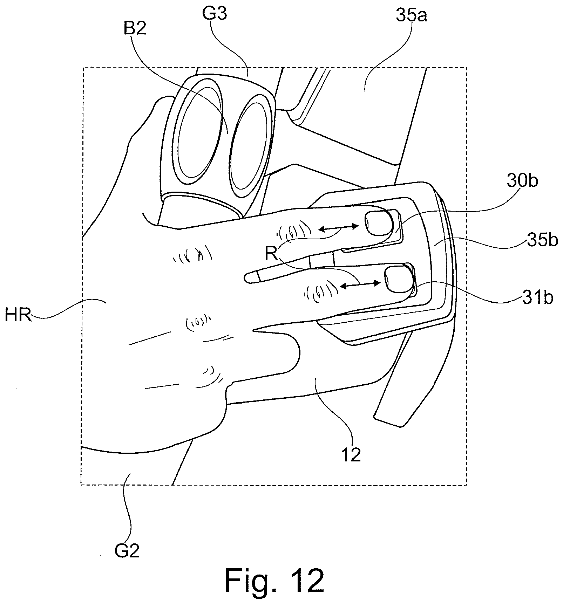

In der Figur 12 sind die mit Abstand hinter dem Bedienelement B2 angeordneten Zusatzbedienelemente 30b, 31 b dargestellt, die jeweils als Schiebeschalter ausgebildet sind, wobei die Figur 12 die Bedienung durch die in der normalen Griffposition befindliche rechte Hand HR zeigt.

Die beiden als Schiebeschalter ausgebildeten Zusatzbedienelemente 30a, 31 a bzw. 30b, 31 b sind nebeneinander angeordnet und in Umfangrichtung des Lenkkranzes 13 voneinander beabstandet. Das in Umfangsrichtung des Lenkkranzes 13 gesehene obere Zusatzbedienelement 30a, 30b ist derart angeordnet, dass es von dem abgespreizten Zeigefinger der den Lenkkranz umgreifenden Hand HL, HR betätigt werden kann. Das in Umfangsrichtung des Lenkkranzes 13 gesehene untere Zusatzbedienelement 31 a, 31 b ist derart angeordnet, dass es von dem abgespreizten Mittelfinger der den Lenkkranz 13 umgreifenden Hand HL, HR betätigt werden kann. Die Schiebeschalter sind hierbei derart angeordnet, dass sich durch die Pfeile in der Figur 12 verdeutlichte Betätigungsrichtungen R der Schiebeschalter ergeben, die in Längsrichtung der Drehachse D des Lenkrades 11 orientiert ist, so dass diese als Schiebeschalter ausgebildeten Zusatzbedienelemente 30a, 30b, 31 a, 31 b durch eine ergonomische Streckbewegung bzw. Beugebewegung des Zeigefingers bzw. des Mittelfingers betätigt werden können.

Wie in der Figur 12 verdeutlicht ist, kann die Bedienperson mit einer einzigen Hand HR bzw. HL das Bedienelement B2 bzw. B1 des Fahrantriebs sowie die Zusatzbedienelemente 30b, 31b bzw. 30a, 31 a betätigen. In der Figur 12 ist diese gleichzeitige Betätigung des Bedienelements B2 und der als Schiebeschalter ausgebildeten Zusatzbedienelemente 30b, 31b für die in der normalen Griffposition befindliche rechte Hand HR dargestellt. Es versteht sich, dass die gleichzeitige Betätigung des Bedienelements B2 und der Zusatzbedienelemente 30b, 31b - analog zu der Figur 10 - auch für die in der alternativen Griffposition befindliche linke Hand HL möglich ist. Weiterhin versteht sich, dass die gleichzeitige Betätigung des Bedienelements B1 und der als Schiebeschalter ausgebildeten Zusatzbedienelemente 30a, 31 a für die in der normalen Griffposition befindliche linke Hand HL sowie für die in der alternativen Griffposition befindliche rechte Hand HR gilt.

Die Ausführung der Zusatzbedienelemente 30a, 30b, 31 a, 31 b als Schiebeschalter ermöglicht es, die Breite der Träger 35a, 35b, d.h. die Abmessungen der Träger 35a, 35b in Umfangsrichtung um die Drehachse D, zu verringern.

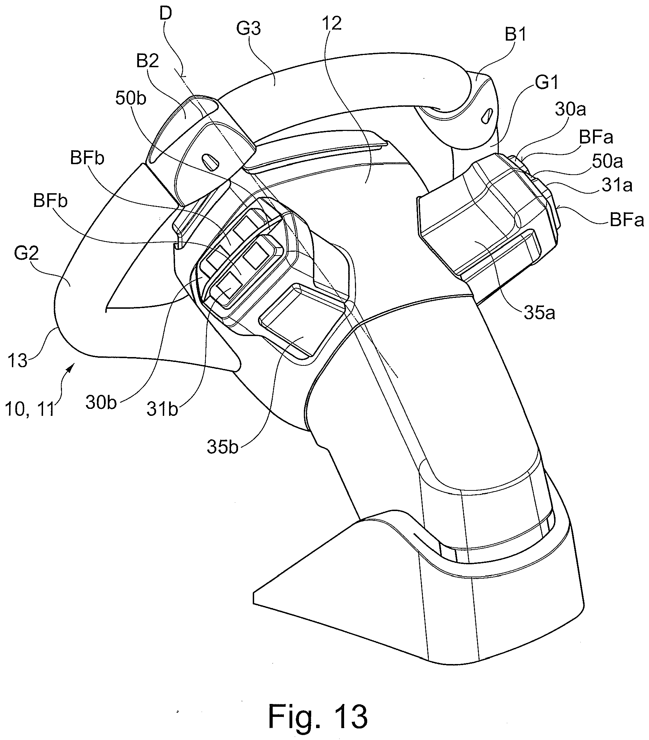

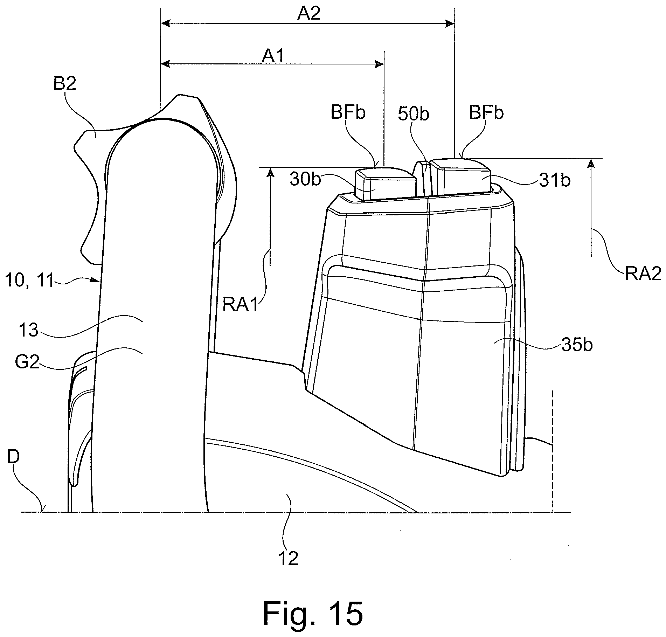

In dem Ausführungsbeispiel der Figuren 13 bis 15 ist eine weitere Ausführungsform des erfindungsgemäßen Lenkers 10 dargestellt. Mit den Figuren 1 bis 12 gleiche Bauteile sind mit den gleichen Bezugsziffern versehen.

Dem linken Bedienelement B1 und dem rechten Bedienelement B2 ist jeweils mindestens ein Zusatzbedienelement, im vorliegenden Ausführungsbeispiel jeweils zwei Zusatzbedienelemente 30a, 31 a, 30b, 31 b, zugeordnet. Die Zusatzbedienelemente 30a, 31 a sind hierbei mit Abstand hinter dem Bedienelement B1 und die Zusatzbedienelemente 30b, 31 b mit Abstand hinter dem Bedienelement B2 an der drehbaren Lenkerkonsole 12 angeordnet.

Für die Anordnung der Zusatzbedienelemente 30a, 31 a mit Abstand von dem Lenkkranz 13 und somit hinter dem Bedienelement B1 ist an der Lenkerkonsole 12 ein Träger 35a angeordnet, der sich an der Lenkerkonsole 12 speichenartig nach radial Außen in den Bereich des Lenkkranzes 13 erstreckt. Die Zusatzbedienelemente 30a, 31 a sind an der radial äußeren Stirnseite des Trägers 35a angeordnet. Entsprechend ist für die Anordnung der Zusatzbedienelemente 30b, 31 b mit Abstand von dem Lenkkranz 13 und somit hinter dem Bedienelement B2 an der Lenkerkonsole 12 ein Träger 35b angeordnet, der sich an der Lenkerkonsole 12 speichenartig nach radial Außen in den Bereich des Lenkkranzes 13 erstreckt. Die Zusatzbedienelemente 30b, 31 b sind an der radial äußeren Stirnseite des Trägers 35b angeordnet.

In dem Ausführungsbeispiel der Figuren 13 bis 15 sind die Zusatzbedienelemente 30a, 30b, 31 a, 31 b jeweils als Wippschalter bzw. Kippschalter ausgebildet.

Die Zusatzbedienelemente 30a, 30b weisen einen ersten Abstand A1 in Längsrichtung der Drehachse D von dem Lenkkranz 13 und die Zusatzbedienelemente 31 a, 31 b weisen einen zweiten Abstand A2 in Längsrichtung der Drehachse D von dem Lenkkranz 13 auf, wobei der erste Abstand A1 kleiner als der zweite Abstand A2 ist. Die Zusatzbedienelemente 30a, 30b sind somit - in Längsrichtung der Drehachse D gesehen - zwischen dem Lenkkranz 13 und den Zusatzbedienelementen 31 a, 31 b angeordnet.

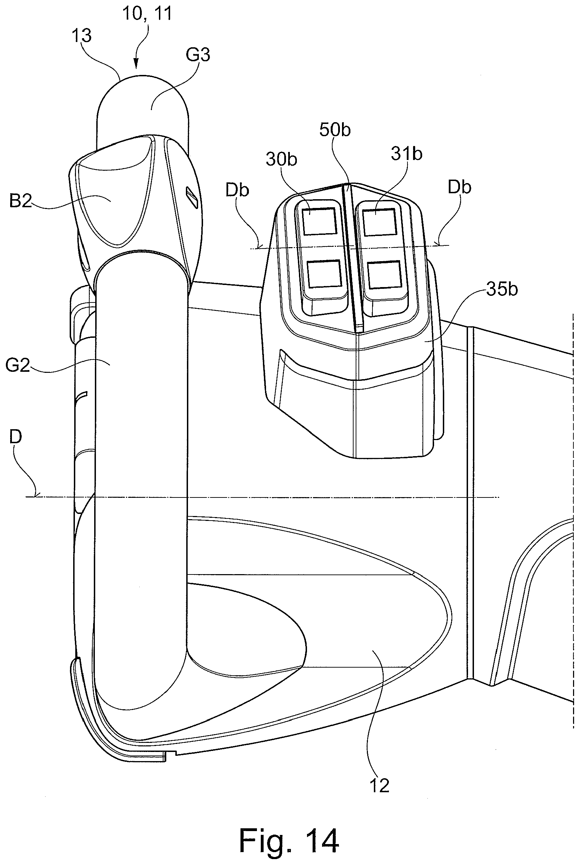

Bei dem Ausführungsbeispiel der Figuren 13-15 sind die als Wippschalter bzw. Kippschalter ausgebildeten Zusatzbedienelemente 30a, 31 a bzw. 30b, 31 b jeweils um eine Schwenkachse Da bzw. Db betätigbar, die geneigt zur Drehachse D des Lenkrades 11 verläuft. Die Schwenkachsen Da bzw. Db der Zusatzbedienelemente 30a, 31 a, 30b, 31 b sind somit geneigt zum Lenkkranz 13 angeordnet. Dies ergibt, dass die Zusatzbedienelemente 30a, 30b, 31 a, 31 b mit der Längserstreckung geneigt zu dem Lenkkranz 13 angeordnet sind, wie aus der Figur 14 an den Zusatzbedienelementen 30b, 31 b ersichtlich ist.

In dem Ausführungsbeispiel der Figuren 13-15 sind die Schwenkachsen Da der Zusatzbedienelemente 30a, 31a in Umfangsrichtung des Lenkkranzes 13 versetzt zueinander angeordnet, so dass die beiden Schwenkachsen Da der beiden Zusatzbedienelemente 30a, 31 a in Umfangsrichtung des Lenkkranzes 13 voneinander beabstandet sind. Entsprechend sind die Schwenkachsen Db der Zusatzbedienelemente 30b, 31 b in Umfangsrichtung des Lenkkranzes 13 versetzt zueinander angeordnet, so dass die beiden Schwenkachsen Db der beiden Zusatzbedienelemente 30b, 31 b in Umfangsrichtung voneinander beabstandet sind.

In Umfangsrichtung des Lenkkranzes 13 gesehen, sind somit in den Figuren 13 bis 15 die beiden Zusatzbedienelemente 30a, 31 a bzw. 30b, 31 b, die einem Bedienelement B1 bzw. B2 des Fahrantriebs zugeordnet sind, in Umfangsrichtung des Lenkkranzes 13 versetzt zueinander angeordnet und jeweils in Umfangsrichtung des Lenkkranzes 13 an verschiedenen Positionen angeordnet. Im dargestellten Ausführungsbeispiel sind die Zusatzbedienelemente 30a, 31 a jeweils in Umfangsrichtung des Lenkkranzes 13 in Richtung zu dem Griffelement G3 hin verschoben.

In den Figuren 13 bis 15 weisen weiterhin die Betätigungsflächen BFb der beiden Zusatzbedienelemente 30b, 31 b (im unbetätigten Zustand der Zusatzbedienelemente 30a, 31 a) von der Drehachse D des Lenkrades 11 einen unterschiedlichen radialen RA1, RA2 Abstand auf. Die Betätigungsflächen BFb des Zusatzbedienelements 30b weist von der Drehachse D des Lenkrades 11 den radialen Anstand RA1 auf und die Betätigungsflächen BFb des Zusatzbedienelements 31 b weist von der Drehachse D des Lenkrades 11 den radialen Anstand RA2 auf. Der radiale Abstand RA1 ist hierbei kleiner als der radiale Abstand RA2. Das von dem Zeigefinger betätigbare Zusatzbedienelement 30b weist somit einen geringeren Abstand RA1 von der Drehachse D des Lenkrades 11 aufweist wie das von dem Mittelfinger betätigbaren Zusatzbedienelement 31 b. Die Betätigungsflächen BFb der beiden Zusatzbedienelemente 30b, 31 b sind somit auf verschiedenen Ebenen angeordnet und es ergeben sich unterschiedliche Höhen der Betätigungsflächen BFb der beiden Zusatzbedienelemente 30a, 31 b im unbetätigten Zustand. Es versteht sich, dass die Betätigungsflächen BFa der beiden Zusatzbedienelemente 30a, 31a analog angeordnet sind.

Bei den Figuren 12 bis 15 ist der Träger 35a, an dem die beiden Zusatzbedienelemente 30a, 31 a angeordnet sind, zwischen den beiden Zusatzbedienelementen 30a, 31 a mit einem Trennelement 50a versehen, das sich in radialer Richtung zu den Betätigungsflächen BFa erstreckt und diese leicht überragen kann. Das Trennelement 50a ist im dargestellten Ausführungsbeispiel als wandartiges oder rippenartiges Trennelement 50a ausgebildet. Entsprechend ist der Träger 35b, an dem die beiden Zusatzbedienelemente 30b, 31 b angeordnet sind, zwischen den beiden Zusatzbedienelementen 30b, 31 b mit einem Trennelement 50b versehen, das sich in radialer Richtung zu den Betätigungsflächen BFb erstreckt und diese leicht überragen kann. Das Trennelement 50b ist im dargestellten Ausführungsbeispiel als wandartiges oder rippenartiges Trennelement 50b ausgebildet.

Das erfindungsgemäße Lenkrad 11 mit den mit Abstand hinter den Bedienelementen B1, B2 des Fahrantriebs angeordneten Zusatzbedienelementen 30a, 30b, 31 a, 31 b ermöglicht es in ergonomischer Weise, dass eine Bedienperson mit nur einer den Lenkkranz umgreifenden Hand HL bzw. HR mit dem Daumen durch Betätigung des Bedienelements B1 bzw. B2 den Fahrantrieb und mit dem Zeigefinger und/oder Mittelfinger ein oder mehrere Zusatzbedienelemente 30a, 31 a bzw. 30b, 31 b für eine Zusatzfunktion oder mehrere Zusatzfunktionen betätigen kann. Die Bedienperson kann somit mit nur einer einzigen den Lenkkranz 13 umgreifenden Hand das Flurförderzeug 1 lenken, gleichzeitig den Fahrantrieb steuern und gleichzeitig eine oder mehrere Zusatzfunktionen ansteuern, beispielsweise eine Hubfunktion eines anhebbaren und absenkbaren Fahrerarbeitsplatzes 4 und/oder eine Zusatzhubfunktion eines Lastaufnahmemittels. Durch die erfindungsgemäße Ausführung des Lenkrades 11 mit den beiden Griffabschnitten G1, G2 und dem Mittelgriffabschnitt G3 und die erfindungsgemäße Anordnung der Zusatzbedienelemente 30a, 31 a, 30b, 31 b ist diese gleichzeitige Bedienung der Lenkung, des Fahrantriebs und der Zusatzfunktion mit einer einzigen Hand sowohl für eine in einer normalen Griffposition befindliche Hand als auch für eine in einer alternativen Griffposition befindliche Hand möglich.

Die Erfindung ist nicht auf die dargestellten Ausführungsbeispiele beschränkt. Das Trennelement 50a, 50b der Figuren 13-15 kann ebenfalls bei dem Ausführungsbeispiel der Figuren 2 bis 10 sowie dem Ausführungsbeispiel der Figur 12 verwendet werden.

Zudem sind bei den Figuren 13-15 die geneigte Anordnung der Schwenkachse Da bzw. Db der Zusatzbedienelemente 30a, 31 a bzw. 30b, 31 b zur Drehachse D des Lenkrades 11, die in Umfangsrichtung des Lenkkranzes 13 versetzte Anordnung der beiden Zusatzbedienelemente 30a, 31 a bzw. 30b, 31 b, und die unterschiedlichen radialen Abstände RA1, RA2 der Betätigungsflächen BFa, BFb beiden Zusatzbedienelemente 30a, 31 a bzw. 30b, 31 b auch unabhängig voneinander realisierbar und in jedweder anderen Kombination kombinierbar.

Weiterhin können bei dem Ausführungsbeispiel der Figuren 2 bis 10 sowie dem Ausführungsbeispiel der Figur 12 unterschiedliche radiale Abstände RA1, RA2 der Betätigungsflächen BFa, BFb der beiden Zusatzbedienelemente 30a, 31 a bzw. 30b, 31 b vorgesehen werden.

In den Figuren 2 bis 10 kann ebenfalls eine geneigte Anordnung der Schwenkachse Da bzw. Db der Zusatzbedienelemente 30a, 31 a bzw. 30b, 31 b zur Drehachse D des Lenkrades 11 vorgesehen werden.

Ebenfalls ist es möglich, in den Figuren 2 bis 10 eine in Umfangsrichtung des Lenkkranzes 13 versetzte Anordnung der beiden Zusatzbedienelemente 30a, 31 a bzw. 30b, 31 b vorzusehen.

## Patentansprüche

1. Lenker (10) eines einen Fahrerarbeitsplatz (4), insbesondere Fahrerstand, aufweisenden Flurförderzeugs (1), wobei der Lenker (10) als Lenkrad (11) ausgebildet ist, das einen Lenkkranz (13) aufweist, der an einer Lenkerkonsole (12) angeordnet ist, die um eine Drehachse (D) drehbar angeordnet ist, wobei an dem Lenkkranz (13) zumindest ein ringförmiges, drehbares Bedienelement (B1; B2) zur Steuerung des Fahrantriebs des Flurförderzeugs (1) angeordnet ist, das von einer Bedienperson (P), die den Lenkkranz (13) mit einer Hand (HL; HR) umgreift, mittels des Daumens der den Lenkkranz (13) umgreifenden Hand (HL; HR) betätigbar ist, wobei beabstandet von dem Lenkkranz (13) mindestens ein Zusatzbedienelement (30a; 31 a; 30b; 31 b) derart an der drehbaren Lenkerkonsole (12) angeordnet ist, dass von einer Bedienperson (P), die den Lenkkranz (13) mit einer Hand (HL; HR) umgreift, mittels des Daumens der den Lenkkranz (13) umgreifenden Hand (HL; HR) das Bedienelement (B1; B2) zur Steuerung des Fahrantriebs betätigbar ist und mittels des abgespreizten Zeigefingers und/oder des abgespreizten Mittelfingers der den Lenkkranz (13) umgreifenden Hand (HL; HR) das mindestens eine Zusatzbedienelement (30a; 31 a; 30b; 31 b) betätigbar ist, **dadurch gekennzeichnet, dass** das mindestens eine Zusatzbedienelement (30a; 31 a; 30b; 31 b) an einer Stirnseite eines Trägers (35a; 35b) angeordnet ist, der an der Lenkerkonsole (12) angeordnet ist und sich speichenartig nach radial Außen erstreckt.

2. Lenker nach Anspruch 1, **dadurch gekennzeichnet, dass** das mindestens eine Zusatzbedienelement (30a; 31 a; 30b; 31 b) derart an der drehbaren Lenkerkonsole (12) angeordnet ist, dass der Handballen der den Lenkkranz (13) umgreifenden Hand (HL; HR) bei der gleichzeitigen Betätigung des Bedienelements (B1; B2) mit dem Daumen und des Zusatzbedienelements (30a; 31 a; 30b; 31 b) mit dem abgespreizten Zeigefinger und/oder dem abgespreizten Mittelfinger auf dem Lenkkranz (13) aufliegt.

3. Lenker nach Anspruch 1 oder 2, **dadurch gekennzeichnet, dass** das mindestens eine Zusatzbedienelement (30a; 31 a; 30b; 31 b) an einer dem Fahrarbeitsplatz (4) abgewandten Rückseite des Lenkrades (11) beabstandet von dem Lenkkranz (13) angeordnet ist.

4. Lenker nach einem der Ansprüche 1 bis 3, **dadurch gekennzeichnet, dass** ein erstes Zusatzbedienelement (30a; 30b) vorgesehen ist, das mittels des abgespreizten Zeigefingers der den Lenkkranz (13) umgreifenden Hand (HL; HR) betätigbar ist, und ein zweites Zusatzbedienelement (31 a; 31 b) vorgesehen ist, das mittels des abgespreizten Mittelfingers der den Lenkkranz (13) umgreifenden Hand (HL; HR) betätigbar ist.

5. Lenker nach einem der Ansprüche 1 bis 4, **dadurch gekennzeichnet, dass** der Lenkkranz (13) einen linken Griffabschnitt (G1), einen rechten Griffabschnitt (GR) und einen Mittelgriffabschnitt (G3) aufweist, wobei ein linkes Bedienelement (B1) zur Steuerung des Fahrantriebs am Übergang des linken Griffabschnitts (G1) zum Mittelgriffabschnitt (G3) und ein rechtes Bedienelement (B2) zur Steuerung des Fahrantriebs am Übergang des rechten Griffabschnitts (G2) zum Mittelgriffabschnitt (G3) angeordnet ist, wobei dem linken Bedienelement (B1) und dem rechten Bedienelement (B2) jeweils mindestens ein Zusatzbedienelement (30a; 31 a; 30b; 31 b) zugeordnet ist.

6. Lenker nach einem der Ansprüche 1 bis 5, **dadurch gekennzeichnet, dass** an dem Träger (35a; 35b) zwei Zusatzbedienelemente (30a, 31 a; 30b, 31 b) angeordnet sind, wobei zwischen den Zusatzbedienelementen (30a, 31 a; 30b, 31 b) der Träger (35a; 35b) mit einem Trennelement (50a; 50b), insbesondere einem wandartigen oder rippenartigen Trennelement (50a; 50b), versehen ist.

7. Lenker nach einem der Ansprüche 1 bis 6, **dadurch gekennzeichnet, dass** das Zusatzbedienelement (30a; 31 a; 30b; 31 b) als Wippschalter oder Kippschalter ausgebildet ist.

8. Lenker nach Anspruch 7, **dadurch gekennzeichnet, dass** zwei als Wippschalter oder Kippschalter ausgebildete Zusatzbedienelemente (30a, 31 a; 30b, 31 b) vorgesehen sind, die von dem Lenkkranz (13) unterschiedlichen Abstand (A1, A2) aufweisen, wobei das von dem Zeigefinger betätigbare Zusatzbedienelement (30a; 30b) zwischen dem Lenkkranz (13) und dem von dem Mittelfinger betätigbaren Zusatzbedienelement (31 a; 31 b) angeordnet ist.

9. Lenker nach Anspruch 7 oder 8, **dadurch gekennzeichnet, dass** das als Wippschalter oder Kippschalter ausgebildete Zusatzbedienelement (30a; 31 a; 30b; 31 b) um eine Schwenkachse (Da, Db) betätigbar ist, wobei die Schwenkachse (Da, Db) parallel oder geneigt zur Drehachse (D) des Lenkrades (11) angeordnet ist.

10. Lenker nach einem der Ansprüche 7 bis 9, **dadurch gekennzeichnet, dass** zwei als Wippschalter oder Kippschalter ausgebildeten Zusatzbedienelemente (30a, 31 a; 30b, 31 b) vorgesehen sind, die jeweils um eine Schwenkachse (Da, Db) betätigbar sind, wobei die Schwenkachsen (Da, Db) der Zusatzbedienelemente (30a, 31 a; 30b, 31 b) fluchtend angeordnet sind oder in Umfangsrichtung des Lenkkranzes (13) versetzt zueinander angeordnet sind.

11. Lenker nach einem der Ansprüche 1 bis 6, **dadurch gekennzeichnet, dass** das Zusatzbedienelement (30a; 31 a; 30b; 31 b) als Schiebeschalter ausgebildet ist.

12. Lenker nach Anspruch 11, **dadurch gekennzeichnet, dass** zwei als Schiebeschalter ausgebildete Zusatzbedienelemente (30a, 31 a; 30b, 31 b) vorgesehen sind, wobei die Zusatzbedienelemente (30a, 31 a; 30b, 31 b) nebeneinander angeordnet sind.

13. Lenker nach einem der Ansprüche 1 bis 12, **dadurch gekennzeichnet, dass** zwei Zusatzbedienelemente (30a, 31 a; 30b, 31 b) vorgesehen sind, wobei die Zusatzbedienelemente (30a, 31 a; 30b, 31 b) jeweils eine Betätigungsfläche (BFa; BFb) aufweisen, wobei die Betätigungsflächen (BFa; BFb) der beiden Zusatzbedienelemente (30a, 31 a; 30b, 31b) von der Drehachse (D) des Lenkrades (11) gleichen Abstand (RA) aufweisen.

14. Lenker nach einem der Ansprüche 1 bis 12, **dadurch gekennzeichnet, dass** zwei Zusatzbedienelemente (30a, 31 a; 30b, 31b) vorgesehen sind, wobei die Zusatzbedienelemente (30a, 31a; 30b, 31b) jeweils eine Betätigungsfläche (BFa; BFb) aufweisen, wobei die Betätigungsflächen (BFa; BFb) der beiden Zusatzbedienelemente (30a, 31 a; 30b, 31 b) von der Drehachse (D) des Lenkrades (11) unterschiedliche Abstände (RA1, RA2) aufweisen.

15. Lenker nach Anspruch 14, **dadurch gekennzeichnet, dass** das von dem Zeigefinger betätigbare Zusatzbedienelement (30a; 30b) einen geringeren Abstand (RA1) von der Drehachse (D) des Lenkrades (11) aufweist wie das von dem Mittelfinger betätigbaren Zusatzbedienelement (31 a; 31 b).

16. Lenker nach einem der Ansprüche 1 bis 15, **dadurch gekennzeichnet, dass** mittels des Zusatzbedienelements (30a; 31 a; 30b; 31b) ein Hubantrieb des Flurförderzeugs (1) steuerbar ist.

17. Lenker nach Anspruch 16, **dadurch gekennzeichnet, dass** der Hubantrieb als Zusatzhubantrieb eines Lastaufnahmemittels ausgebildet ist.

18. Lenker nach Anspruch 16, **dadurch gekennzeichnet, dass** der Hubantrieb als Hubfunktion eines anhebbaren und absenkbaren Fahrerarbeitsplatzes (4) ausgebildet ist.

19. Lenker nach einem der Ansprüche 1 bis 18, **dadurch gekennzeichnet, dass** das Flurförderzeug (1) als Horizontalkommissionier oder Niederhubwagen oder Hochhubwagen ausgebildet ist, der als durch das mindestens eine Zusatzbedienelement (30a; 31 a; 30b; 31 b) steuerbare Zusatzfunktion einen Zusatzhubantrieb eines Lastaufnahmemittels und/oder eine Hubfunktion eines anhebbaren und absenkbaren Fahrerarbeitsplatzes (4) aufweist.

20. Lenker nach einem der Ansprüche 1 bis 17, **dadurch gekennzeichnet, dass** das Flurförderzeug (1) als Vertikalkommissionierer ausgebildet ist, der als durch das mindestens eine Zusatzbedienelement (30a; 31 a; 30b; 31 b) steuerbare Zusatzfunktion einen Zusatzhubantrieb eines Lastaufnahmemittels aufweist.

## Claims

1. Steering device (10) of an industrial truck (1) having a driver's workplace (4), in particular a driver's platform, wherein the steering device (10) is embodied as a steering wheel (11) which has a steering wheel rim (13) which is arranged on a steering device console (12), which is arranged so as to rotate about a rotational axis (D), wherein at least one annular rotatable operator control element (B1; B2) for controlling the traction drive of the industrial truck (1) is arranged on the steering wheel rim (13), which operator control element (B1; B2) can be activated by an operator (P), whose hand (HL; HR) engages around the steering wheel rim (13), by means of the thumb of the hand (HL; HR) engaging around the steering wheel rim (13), wherein at least one additional operator control element (30a; 31a; 30b; 31b) is arranged spaced apart from the steering wheel rim (13) on the rotatable steering device console (12) in such a way that an operator (P) whose hand (HL; HR) engages around the steering wheel rim (13) can activate the operator control element (B1; B2) by means of the thumb of the hand (HL; HR) engaging around the steering wheel rim (13), in order to control the traction drive, and the at least one additional operator control element (30a; 31a; 30b; 31b) can be activated by means of the spread-out index finger and/or the spread-out middle finger of the hand (HL; HR) engaging around the steering wheel rim (13), **characterized in that** the at least one additional operator control element (30a; 31a; 30b; 31b) is arranged on an end side of a carrier (35a; 35b) which is arranged on the steering device console (12) and extends radially outwards in a spoke-like manner.

2. Steering device according to Claim 1, **characterized in that** the at least one additional operator control element (30a; 31a; 30b; 31b) is arranged on the rotatable steering device console (12) in such a way that the ball of the hand (HL; HR) engaging around the steering wheel rim (13) rests on the steering wheel rim (13) during the simultaneous activation of the operator control element (B1; B2) with the thumb, and of the additional operator control element (30a; 31a; 30b; 31b) with the spread-out index finger and/or the spread-out middle finger.

3. Steering device according to Claim 1 or 2, **characterized in that** the at least one additional operator control element (30a; 31a; 30b; 31b) is arranged spaced apart from the steering wheel rim (13) on a rear side of the steering wheel (11) facing away from the driver's workplace (4).

4. Steering device according to one of Claims 1 to 3, **characterized in that** a first additional operator control element (30a; 30b) is provided which can be activated by means of the spread-out index finger of hand (HL; HR) engaging around the steering wheel rim (13), and a second additional operator control element (31a; 31b) is provided which can be activated by means of the spread-out middle finger of the hand (HL; HR) engaging around the steering wheel rim (13).

5. Steering device according to one of Claims 1 to 4, **characterized in that** the steering wheel rim (13) has a left-hand grip section (G1), a right-hand grip section (GR) and a centre grip section (G3), wherein a left-hand operator control element (B1) for controlling the traction drive is arranged at the junction of the left-hand grip section (G1) with the centre grip section (G3), and a right-hand operated control element (B2) for controlling the traction drive is arranged at the junction of the right-hand grip section (G2) with the centre grip section (G3), wherein at least one additional operator control element (30a; 31a; 30b; 31b) is respectively assigned to the left-hand operator control element (B1) and to the right-hand operator control element (B2).

6. Steering device according to one of Claims 1 to 5, **characterized in that** two additional operator control elements (30a, 31a; 30b, 31b) are arranged on the carrier (35a; 35b), wherein between the additional operator control elements (30a, 31a; 30b, 31b) the carrier (35a; 35b) is provided with a dividing element (50a; 50b), in particular a wall-like or rib-like dividing element (50a; 50b).

7. Steering device according to one of Claims 1 to 6, **characterized in that** the additional operator control element (30a; 31a; 30b; 31b) is embodied as a rocker switch or toggle switch.

8. Steering device according to Claim 7, **characterized in that** two additional operator control elements (30a; 31a; 30b, 31b) which are embodied as rocker switches or toggle switches and which are at different distances (A1, A2) from the steering wheel rim (13) are provided, wherein the additional operator control element (30a; 30b) which can be activated by the index finger is arranged between the steering wheel rim (13) and the additional operator control element (31a; 31b) which can be activated by the middle finger.

9. Steering device according to Claim 7 or 8, **characterized in that** the additional operator control element (30a; 31a; 30b; 31b) which is embodied as a rocker switch or toggle switch can be activated about a pivoting axis (Da, Db), wherein the pivoting axis (Da, Db) is arranged in parallel or inclined in relation to the rotational axis (D) of the steering wheel (11).

10. Steering device according to one of Claims 7 to 9, **characterized in that** two additional operator control elements (30a, 31a; 30b, 31b) which are embodied as a rocker switch or toggle switch and which can each be activated about a pivoting axis (Da, Db) are provided, wherein the pivoting axes (Da, Db) of the additional operator control elements (30a, 31a; 30b, 31b) are arranged in an aligned fashion or are arranged offset with respect to one another in the circumferential direction of the steering wheel rim (13).

11. Steering device according to one of Claims 1 to 6, **characterized in that** the additional operator control element (30a; 31a; 30b; 31b) is embodied as a sliding switch.

12. Steering device according to Claim 11, **characterized in that** two additional operator control elements (30a; 31a; 30b; 31b) which are embodied as sliding switches are provided, wherein the additional operator control elements (30a; 31a; 30b; 31b) are arranged one next to the other.

13. Steering device according to one of Claims 1 to 12, **characterized in that** two additional operator control elements (30a, 31a; 30b, 31b) are provided, wherein the additional operator control elements (30a, 31a; 30b, 31b) each have an activation face (BFa; BFb), wherein the activation faces (BFa; BFb) of the two additional operator control elements (30a, 31a; 30b, 31b) are at the same distance (RA) from the rotational axis (D) of the steering wheel (11).

14. Steering device according to one of Claims 1 to 12, **characterized in that** two additional operator control elements (30a, 31a; 30b, 31b) are provided, wherein the additional operator control elements (30a, 31a; 30b, 31b) each have an activation face (BFa; BFb), wherein the activation faces (BFa; BFb) of the two additional operator control elements (30a, 31a; 30b, 31b) are at different distances (RA1, RA2) from the rotational axis (D) of the steering wheel (11).

15. Steering device according to Claim 14, **characterized in that** the additional operator control element (30a; 30b) which can be activated by the index finger is at a shorter distance (RA1) from the rotational axis (D) of the steering wheel (11) than the additional operator control element (31a; 31b) which can be activated by the middle finger.

16. Steering device according to one of Claims 1 to 15, **characterized in that** a lifting drive of the industrial truck (1) can be controlled by means of the additional operator control element (30a; 31a; 30b; 31b).

17. Steering device according to Claim 16, **characterized in that** the lifting drive is embodied as an additional lifting drive of a load handling device.

18. Steering device according to Claim 16, **characterized in that** the lifting drive is embodied as a lifting function of a liftable and lowerable driver's workplace (4).

19. Steering device according to one of Claims 1 to 18, **characterized in that** the industrial truck (1) is embodied as a horizontal order picker or low lift pallet truck or high lift pallet truck which has, as an additional function which can be controlled by the at least one additional operator control element (30a; 31a; 30b; 31b), an additional lifting drive of load handling device and/or a lifting function of a liftable and lowerable driver's work station (4).

20. Steering device according to one of Claims 1 to 17, **characterized in that** the industrial truck (1) is embodied as a vertical order picker which has, as an additional function which can be controlled by the at least one additional operator control element (30a; 31a; 30b; 31b), an additional lifting drive of a load handling device.

## Revendications

1. Organe de direction (10) pour un chariot de manutention (1) présentant un poste de travail de conducteur (4), en particulier un poste de conduite, l'organe de direction (10) étant réalisé sous forme de volant de direction (11) qui présente une couronne de direction (13) qui est disposée sur une console d'organe de direction (12) qui est disposée de manière à pouvoir tourner autour d'un axe de rotation (D), au moins un élément de commande rotatif de forme annulaire (B1 ; B2) étant disposé sur la couronne de direction (13) pour commander l'entraînement de conduite du chariot de manutention (1), lequel peut être actionné par un opérateur (P) qui saisit la couronne de direction (13) d'une main (HL ; HR) au moyen du pouce de la main (HL ; HR) saisissant la couronne de direction (13), au moins un élément de commande supplémentaire (30a ; 31a ; 30b ; 31b) étant disposé à distance de la couronne de direction (13) sur la console d'organe de direction rotative (12) de telle sorte que l'élément de commande (B1 ; B2) puisse être actionné pour commander l'entraînement de conduite par un opérateur (P) qui saisit la couronne de direction (13) d'une main (HL ; HR) au moyen du pouce de la main (HL ; HR) saisissant la couronne de direction (13) et l'au moins un élément de commande supplémentaire (30a ; 31a ; 30b ; 31b) puisse être actionné au moyen de l'index écarté et/ou du majeur écarté de la main (HL ; HR) saisissant la couronne de direction (13), **caractérisé en ce que** l'au moins un élément de commande supplémentaire (30a ; 31a ; 30b ; 31b) est disposé au niveau d'un côté frontal d'un support (35a ; 35b) qui est disposé sur la console d'organe de direction (12) et s'étend radialement vers l'extérieur à la manière d'un rayon.

2. Organe de direction selon la revendication 1, **caractérisé en ce que** l'au moins un élément de commande supplémentaire (30a ; 31a ; 30b ; 31b) est disposé sur la console d'organe de direction rotative (12) de telle sorte que la paume de la main (HL ; HR) saisissant la couronne de direction (13), lors de l'actionnement simultané de l'élément de commande (B1 ; B2) avec le pouce et de l'élément de commande supplémentaire (30a ; 31a ; 30b ; 31b) avec l'index écarté et/ou avec le majeur écarté, repose sur la couronne de direction (13).

3. Organe de direction selon la revendication 1 ou 2, **caractérisé en ce que** l'au moins un élément de commande supplémentaire (30a ; 31a ; 30b ; 31b) est disposé sur un côté arrière du volant de direction (11) opposé au poste de travail de conducteur (4) et espacé de la couronne de direction (13).

4. Organe de direction selon l'une quelconque des revendications 1 à 3, **caractérisé en ce qu'**un premier élément de commande supplémentaire (30a ; 30b) est prévu, lequel peut être actionné au moyen de l'index écarté de la main (HL ; HR) saisissant la couronne de direction (13) et un deuxième élément de commande supplémentaire (31a ; 31b) est prévu, lequel peut être actionné au moyen du majeur écarté de la main (HL; HR) saisissant la couronne de direction (13).

5. Organe de direction selon l'une quelconque des revendications 1 à 4, **caractérisé en ce que** la couronne de direction (13) présente une portion de préhension gauche (G1), une portion de préhension droite (GR) et une portion de préhension centrale (G3), un élément de commande gauche (B1) étant disposé de manière à commander l'entraînement de conduite au niveau de la transition de la portion de préhension gauche (G1) à la portion de préhension centrale (G3) et un élément de commande droit (B2) étant disposé de manière à commander l'entraînement de conduite au niveau de la transition de la portion de préhension droite (G2) à la portion de préhension centrale (G3), à chaque fois au moins un élément de commande supplémentaire (30a ; 31a ; 30b ; 31b) étant associé à l'élément de commande gauche (B1) et à l'élément de commande droit (B2).

6. Organe de direction selon l'une quelconque des revendications 1 à 5, **caractérisé en ce que** deux éléments de commande supplémentaires (30a ; 31a ; 30b ; 31b) sont disposés sur le support (35a ; 35b), le support (35a ; 35b), entre les éléments de commande supplémentaires (30a ; 31a ; 30b ; 31b), étant pourvu d'un élément de séparation (50a ; 50b), en particulier d'un élément de séparation de type paroi ou de type nervure (50a ; 50b).

7. Organe de direction selon l'une quelconque des revendications 1 à 6, **caractérisé en ce que** l'élément de commande supplémentaire (30a ; 31a ; 30b ; 31b) est réalisé sous forme de commutateur à bascule ou d'interrupteur à bascule.

8. Organe de direction selon la revendication 7, **caractérisé en ce que** deux éléments de commande supplémentaires (30a, 31a ; 30b, 31b) réalisés sous forme de commutateur à bascule ou d'interrupteur à bascule sont prévus, lesquels présentent une distance (A1, A2) différente à la couronne de direction (13), l'élément de commande supplémentaire (30a ; 30b) actionné par l'index étant disposé entre la couronne de direction (13) et l'élément de commande supplémentaire (31a ; 31b) pouvant être actionné par le majeur.

9. Organe de direction selon la revendication 7 ou 8, **caractérisé en ce que** l'élément de commande supplémentaire (30a ; 31a ; 30b ; 31b) réalisé sous forme de commutateur à bascule ou d'interrupteur à bascule peut être actionné autour d'un axe de pivotement (Da, Db), l'axe de pivotement (Da, Db) étant disposé parallèlement ou de manière inclinée par rapport à l'axe de rotation (D) du volant de direction (11).

10. Organe de direction selon l'une quelconque des revendications 7 à 9, **caractérisé en ce que** deux éléments de commande supplémentaires (30a, 31a ; 30b, 31b) réalisés sous forme de commutateur à bascule ou d'interrupteur à bascule sont prévus, lesquels peuvent être actionnés à chaque fois autour d'un axe de pivotement (Da, Db), les axes de pivotement (Da, Db) des éléments de commande supplémentaires (30a, 31a ; 30b, 31b) étant disposés en affleurement ou étant disposés de manière décalée l'un par rapport à l'autre dans la direction périphérique de la couronne de direction (13).

11. Organe de direction selon l'une quelconque des revendications 1 à 6, **caractérisé en ce que** l'élément de commande supplémentaire (30a ; 31a ; 30b ; 31b) est réalisé sous forme de commutateur coulissant.

12. Organe de direction selon la revendication 11, **caractérisé en ce que** deux éléments de commande supplémentaires (30a, 31a ; 30b, 31b) réalisés sous forme de commutateur coulissant sont prévus, les éléments de commande supplémentaires (30a, 31a ; 30b, 31b) étant disposés l'un à côté de l'autre.

13. Organe de direction selon l'une quelconque des revendications 1 à 12, **caractérisé en ce que** deux éléments de commande supplémentaires (30a, 31a ; 30b, 31b) sont prévus, les éléments de commande supplémentaires (30a, 31a ; 30b, 31b) présentant chacun une surface d'actionnement (BFa ; BFb), les surfaces d'actionnement (BFa ; BFb) des deux éléments de commande supplémentaires (30a, 31a ; 30b, 31b) présentant la même distance (RA) à l'axe de rotation (D) du volant de direction (11).

14. Organe de direction selon l'une quelconque des revendications 1 à 12, **caractérisé en ce que** deux éléments de commande supplémentaires (30a, 31a ; 30b, 31b) sont prévus, les éléments de commande supplémentaires (30a, 31a ; 30b, 31b) présentant chacun une surface d'actionnement (BFa ; BFb), les surfaces d'actionnement (BFa ; BFb) des deux éléments de commande supplémentaires (30a, 31a ; 30b, 31b) présentant des distances (RA1, RA2) différentes à l'axe de rotation (D) du volant de direction (11).

15. Organe de direction selon la revendication 14, **caractérisé en ce que** l'élément de commande supplémentaire (30a ; 30b) pouvant être actionné par l'index présente une plus faible distance (RA1) à l'axe de rotation (D) du volant de direction (11) que l'élément de commande supplémentaire (31a ; 31b) pouvant être actionné par le majeur.

16. Organe de direction selon l'une quelconque des revendications 1 à 15, **caractérisé en ce qu'**un entraînement de levage du chariot de manutention (1) peut être commandé au moyen de l'élément de commande supplémentaire (30a ; 31a ; 30b ; 31b).

17. Organe de direction selon la revendication 16, **caractérisé en ce que** l'entraînement de levage est réalisé sous forme d'entraînement de levage supplémentaire d'un moyen de réception de la charge.

18. Organe de direction selon la revendication 16, **caractérisé en ce que** l'entraînement de levage est réalisé sous forme de fonction de levage d'un poste de travail de conducteur (4) pouvant être levé et abaissé.

19. Organe de direction selon l'une quelconque des revendications 1 à 18, **caractérisé en ce que** le chariot de manutention (1) est réalisé sous forme de chariot de préparation des commandes horizontal ou chariot à faible levée ou chariot à grande levée, qui présente, en tant que fonction supplémentaire pouvant être commandée par l'au moins un élément de commande supplémentaire (30a ; 31a ; 30b ; 31b), un entraînement de levage supplémentaire d'un moyen de réception de la charge et/ou une fonction de levage d'un poste de travail de conducteur (4) pouvant être levé et abaissé.

20. Organe de direction selon l'une quelconque des revendications 1 à 17, **caractérisé en ce que** le chariot de manutention (1) est réalisé sous forme de chariot de préparation des commandes vertical, qui présente, en tant que fonction supplémentaire pouvant être commandée par l'au moins un élément de commande supplémentaire (30a ; 31a ; 30b ; 31b), un entraînement de levage supplémentaire d'un moyen de réception de la charge.
